(19) **Europäisches Patentamt** / **European Patent Office** / **Office européen des brevets**

(11) **EP 3 327 480 B1**

(12) **EUROPEAN PATENT SPECIFICATION**

(45) Date of publication and mention
of the grant of the patent:
**29.07.2020  Bulletin 2020/31**

(51) Int Cl.:
***G02B 15/14*** *(2006.01)*

(21) Application number: **17203629.5**

(22) Date of filing: **24.11.2017**

(54) **ZOOM LENS SYSTEM, IMAGING OPTICAL DEVICE, AND DIGITAL APPARATUS**

ZOOMOBJEKTIVSYSTEM, OPTISCHE BILDGEBUNGSVORRICHTUNG UND DIGITALE VORRICHTUNG

SYSTÈME DE LENTILLE À FOCALE VARIABLE, DISPOSITIF D'IMAGERIE OPTIQUE ET APPAREIL NUMÉRIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **29.11.2016  JP 2016231075**

(43) Date of publication of application:
**30.05.2018  Bulletin 2018/22**

(73) Proprietor: **Konica Minolta, Inc.**
**Tokyo 100-7015 (JP)**

(72) Inventor: **Souma, Yoshihito**
**Japan, 100-7015 (JP)**

(74) Representative: **Burton, Nick**
**Urquhart-Dykes & Lord LLP**
**Arena Point**
**Merrion Way**
**Leeds LS2 8PA (GB)**

(56) References cited:
**WO-A1-2015/178095      JP-A- 2015 203 734**
**US-A1- 2015 124 322**

**Description**

**BACKGROUND OF THE INVENTION**

1. Field of the Invention

The present invention relates to a zoom lens system, an imaging optical device, and a digital apparatus. For example, the present invention relates to the following: a compact wide-angle zoom lens system which captures an image of a subject with an imaging element; an imaging optical device which outputs, as an electrical signal, the image of the subject the zoom lens system has captured with the imaging element; and a digital apparatus having an image input function, such as a digital camera, that incorporates such an imaging optical device.

2. Description of Related Art

Examples of conventionally known wide-angle zoom lens systems are described in Patent Documents 1 and 2, listed below.

Patent Document 1: Japanese Patent Application published as No. 2014-206674
Patent Document 2: Japanese Patent Application published as No. 2015-166834

A zoom lens system described in Patent Document 1, which is an optical system for use in a single-lens reflex camera, needs to obtain a wide-angle and long back focus, and hence adopts what is called a retro-focus lens type, in which a negative optical power is arranged in the first lens group and a positive optical power is arranged in the last lens group. In this type, the strong negative optical power of the first lens group causes large amounts of distortion aberration and coma aberration. For correction of such aberration, the zoom lens system described in Patent Document 1 has two aspherical lens elements arranged in the first lens group. Thus, the optical system of Patent Document 1 cannot be said to be preferably usable in mirrorless cameras, which do not require a long back focus.

On the other hand, a zoom lens system described in Patent Document 2, which is an optical system for use in a mirrorless camera, does not need to secure a long back focus, and the last lens group thereof has a negative optical power. This makes it possible to cancel, with a fourth lens group as the last lens group, distortion aberration and coma aberration caused by the strong negative optical power of the first lens group, contributing to advantageously easy aberration correction. However, this optical system is configured such that focusing is performed by moving a positive lens group disposed closer to the image side than a stop toward the object side, and this configuration suffers a disadvantage that lateral chromatic aberration for the g-line greatly varies during focusing from infinity to a close distance.

WO 2015/178095 A1 describes a zoom lens and an image-capturing device having the same. The zoom lens is reduced in size and weight with various types of aberrations corrected while having a sufficiently wide angle of view. The zoom lens includes a front group having negative refractive power, and a rear group including an aperture stop and having positive refractive power. The front group includes a first lens having negative refractive power, and the first lens is a meniscus-shaped lens with a convex surface oriented toward an object side. The rear group has a first lens unit and a second lens unit, and the separation between the front group and the rear group is changed when power is varied from a wide-angle end to a telephoto end.

US 2015/124322 A1 describes a zoom lens system includes a negative first lens group, a positive second lens group, a negative third lens group and a positive fourth lens group, in that order from the object side. Upon zooming from the short to long focal length extremities, at least the first lens group, the second lens group and the fourth lens group are moved in the optical axis direction. The third lens group includes a negative first sub-lens group and a negative second sub-lens group, in that order from the object side. The second sub-lens group is provided with a negative single lens element and a positive single lens element, wherein an air lens is formed between the negative single lens element and the positive single lens element.

**SUMMARY OF THE INVENTION**

The present invention has been made against this background, and an object thereof is to provide a high-performance and compact zoom lens system where aberration variation during focusing is reduced, an imaging optical device and a digital apparatus including the same.

According to an aspect of the invention, there is provided a zoom lens system as defined in independent claim 1.

According to another aspect of the present invention, an imaging optical device is defined in claim 6.

According to still another aspect of the present invention, a digital apparatus is defined in claim 7.

## BRIEF DESCRIPTION OF THE DRAWINGS

FIG. 1 is an optical configuration diagram of a first illustrative example that is not part of the invention (Example 1);
FIG. 2 is an optical configuration diagram of a second embodiment (Example 2);
FIG. 3 is an optical configuration diagram of a third embodiment (Example 3);
FIG. 4 is an optical configuration diagram of a fourth embodiment (Example 4);
FIG. 5 is an optical configuration diagram of a fifth embodiment (Example 5);
FIG. 6 is an optical configuration diagram of a sixth embodiment (Example 6);
FIGS. 7A to 7I are longitudinal aberration diagrams of Example 1;
FIGS. 8A to 8I are longitudinal aberration diagrams of Example 2;
FIGS. 9A to 9I are longitudinal aberration diagrams of Example 3;
FIGS. 10A to 10I are longitudinal aberration diagrams of Example 4;
FIGS. 11A to 11I are longitudinal aberration diagrams of Example 5;
FIGS. 12A to 12I are longitudinal aberration diagrams of Example 6;
FIGS. 13A to 13C are lateral chromatic aberration diagrams of Example 1;
FIGS. 14A to 14C are lateral chromatic aberration diagrams of Example 2;
FIGS. 15A to 15C are lateral chromatic aberration diagrams of Example 3;
FIGS. 16A to 16C are lateral chromatic aberration diagrams of Example 4;
FIGS. 17A to 17C are lateral chromatic aberration diagrams of Example 5;
FIGS. 18A to 18C are lateral chromatic aberration diagrams of Example 6; and
FIG. 19 is a schematic diagram illustrating an example of the outline configuration of a digital apparatus incorporating a zoom lens system.

## DETAILED DESCRIPTION OF EMBODIMENTS

Hereinafter, descriptions will be given of a zoom lens system, an imaging optical device, and a digital apparatus which embody the present invention. According to an embodiment of the present invention, a zoom lens system is an optical system which includes, in order from an object side, a first lens group having a negative optical power, a second lens group having a positive optical power, a third lens group having a positive optical power, and a fourth lens group having a negative optical power (optical power is defined as reciprocal of focal length). The zoom lens system performs magnification variation by varying an axial group-to-group distance. Here, during magnification variation from a wide angle end to a telephoto end, a distance between the first and second lens groups is reduced, a distance between the second and third lens groups is reduced, and a distance between the third and fourth lens groups is increased. Further, the second lens group is composed of, in order from the object side, a second-a lens group and a second-b lens group, the second-a lens group having a positive optical power, and focusing to a nearby object is performed by moving the second-a lens group toward an image side.

Furthermore, the zoom lens system described above satisfies conditional formulae (1) and (2) below:

$$0.6 < f4/f1 < 5.0 \tag{1}$$

$$-2.0 < (1 - \beta 2w^2) \times \beta rw^2 < -0.1 \tag{2}$$

where

$\beta 2w$ represents a paraxial lateral magnification of the second-a lens group at the wide angle end;
$\beta rw$ represents a composite paraxial lateral magnification of the second-b lens group and subsequent lens groups at the wide angle end;
f1 represents a focal length of the first lens group; and
f4 represents a focal length of the fourth lens group.

By adopting an optical power arrangement including, from the object side, negative, positive, positive, and negative optical powers, and by appropriately setting a focal length ratio between the first lens group and the fourth lens group, it is possible to achieve high optical performance preferable for wide-angle zoom lens systems. Further, with the fourth lens group having a negative optical power, it is possible to cancel distortion aberration and coma aberration occurring in the first lens group having a negative optical power. This makes it possible to correct distortion aberration and coma aberration without arranging two aspherical lens elements in the first lens group as in the zoom lens system described in Patent Document 1.

Under the lower limit of conditional formula (1), with a negative optical power, the fourth lens group have too strong an optical power with respect to the optical power of the first lens group, such that an incident angle of an off-axis light ray on an image surface is increased, and this may invite color shading and degradation of illumination in a case where an imaging element is used. Reversely, over the upper limit of conditional formula (1), the fourth lens group has too weak an optical power with respect to the optical power of the first lens group, which works to reduce the effect of correcting distortion aberration and coma aberration occurring in the first lens group at the wide angle end, and this makes it impossible to achieve desired optical performance. Accordingly, when conditional formula (1) is satisfied, it is possible to reduce occurrence of color shading and degradation of illumination, and thus to achieve high optical performance.

Further, by dividing the second lens group into two sub lens groups such that an object-side one (specifically, the second-a lens group) of the sub lens groups has a positive optical power and moves toward the image side during focusing to a close distance, a variation of g-line lateral chromatic aberration at the wide angle end occurring when a focusing lens group is moved in a close-distance direction can be set to a direction of an image-height minus side. In lateral chromatic aberration occurring in a wide-angle lens system, when an object approaches the lens system, the g-line generally shifts to an image-height plus side, and hence, variation of lateral chromatic aberration by the focusing lens group described just above can cancel it. As a result, it is possible to reduce the variation of lateral chromatic aberration due to variation of shooting distance.

Further, by setting a magnification relationship so as to satisfy conditional formula (2), it is possible to achieve a compact optical system having high optical performance and capable of easily accomplishing the focusing function. Specifically, under the lower limit of conditional formula (2), an amount of movement of the image surface caused by the movement of the focusing lens group is too large, and this makes it difficult to stop focus at a predetermined position. On the other hand, over the upper limit of conditional formula (2), the amount of movement of the image surface caused by the movement of the focusing lens group is too small, and this requires a large focus movement area, and thus invites increase in size of the optical system. For reduction of the focus movement area, it is necessary to enhance the optical power of the second-a lens group, which makes it difficult to correct spherical aberration and coma aberration in the whole optical system.

The above-described advantages are all achievable also in a case where a fifth lens group and subsequent lens groups are included to be disposed after the negative, positive, positive, and negative lens groups. For example, the sixth embodiment and Example 6, which will be described later, are examples where a positive lens element having a relatively strong optical power is put in as a fifth lens group to improve angles at which light rays are incident on the image surface. As is clear from optical performance of Example 6, a configuration including a fifth and subsequent lens groups also inherits the advantages achievable by the adoption of the above-discussed configuration.

According to the features described above, it is possible to achieve a high-performance compact zoom lens system where aberration variation in focusing is reduced, and an imaging optical device including the same. When such a zoom lens system or such an imaging optical device is employed in a digital apparatus (such as a digital camera), it is possible to equip the digital apparatus with a high-performance image input function in a compact manner. This contributes to miniaturization, cost reduction, enhanced performance, higher functionality, etc. of the digital apparatus. For example, a zoom lens system having the above-described features is suitable as an interchangeable lens system for mirrorless interchangeable-lens system digital cameras, and thus contributes to achievement of a lightweight, compact, and high-performance portable interchangeable lens system. Descriptions will be given below of conditions, etc. required to obtain these advantages in a balanced manner, along with higher optical performance, further reduced weight, and further compactness, etc.

It is further desirable to satisfy conditional formula (1a) below:

$$1.0 < f4/f1 < 4.5 \tag{1a}$$

Conditional formula (1a) specifies, in the range of the conditions specified by conditional formula (1) described above, a more preferable range of conditions based on the above-described viewpoints, etc. Hence, it is preferable to satisfy conditional formula (1a), which helps to further secure the above-described effects to make it possible to further enhance the above-described advantages.

It is further desirable to satisfy conditional formula (2a) below:

$$-1.0 < (1 - \beta2w^2) \times \beta rw^2 < -0.3 \qquad (2a)$$

Conditional formula (2a) specifies, in the range of the conditions specified by conditional formula (2) described above, a more preferable range of conditions based on the above-described viewpoints, etc. Hence, it is preferable to satisfy conditional formula (2a), which helps to further secure the above-described effects to make it possible to further enhance the above-described advantages.

A distance between the second-a and second-b lens groups is configured to vary during magnification variation. In a case where an AF (autofocus) is incorporated to perform focusing by means of the second-a lens group, the second-a group is generally driven by an actuator such as a stepping motor or the like. Accordingly, it is also easy to detect a user's operation for zooming and drive the actuator in synchronicity with the user's operation to thereby move the second-a lens group during zooming. In that case, the optical system has a zoom type including a negative-positive-positive-positive-negative optical power arrangement or a zoom type including a negative-positive-negative-positive-negative optical power arrangement, and it is possible to obtain an effect of correcting field curvature variation due to zooming by changing the distance between the second and third lens groups (2a-to-2b distance) during zooming. This is because, with these zoom types, it is possible to increase the degree of freedom of correction while keeping the characteristics of the zoom type that includes a negative-positive-positive-negative optical power arrangement even when the original fixed distance within the second lens group is slightly varied.

The second-b lens group and the fourth lens group are configured to move integrally with each other during magnification variation. By setting such that the second-b lens group and the fourth lens group move integrally with each other during magnification variation, it becomes possible to hold the second-b lens group and the fourth lens group with one same lens holder, and this helps simplify the mechanism of the zoom lens system.

It is desirable to satisfy conditional formula (3) below:

$$-1.5 < f3/f4 < -0.3 \qquad (3)$$

where

f3 represents a focal length of the third lens group; and
f4 represents a focal length of the fourth lens group.

Under the lower limit of conditional formula (3), the third lens group has too weak a positive optical power with respect to the negative optical power of the fourth lens group, and this results in an upsizing tendency of the optical system. To retain the size of the optical system, it is necessary to enhance the positive optical power of the second lens group, but this makes it difficult to correct spherical aberration and coma aberration. Reversely, over the upper limit of conditional formula (3), the third lens group has too strong a positive optical power with respect to the negative optical power of the fourth lens group, and this makes it difficult to correct coma aberration occurring in the third lens group. Hence, satisfying conditional formula (3) makes it possible to achieve further compactness and higher performance of the zoom lens system in a balanced manner.

It is further desirable to satisfy conditional formula (3a) below:

$$-1.0 < f3/f4 < -0.4 \qquad (3a)$$

Conditional formula (3a) specifies, in the range of the conditions specified by conditional formula (3) described above, a more preferable range of conditions based on the above-described viewpoints, etc. Hence, it is preferable to satisfy conditional formula (3a), which makes it possible to further enhance the above-described advantages.

It is desirable to satisfy conditional formula (4) below:

$$-2.5 < f3/f1 < -0.8 \qquad (4)$$

where

f1 represents the focal length of the first lens group; and
f3 represents the focal length of the third lens group.

Under the lower limit of conditional formula (4), the third lens group has too weak a positive optical power with respect to the negative optical power of the first lens group, and this results in an upsizing tendency of the optical system. To retain the size of the optical system, it is necessary to enhance the positive optical power of the second lens group, which makes it difficult to correct spherical aberration and coma aberration. Reversely, over the upper limit of conditional formula (4), the third lens group has too strong a positive optical power with respect to the negative optical power of the first lens group, and this makes it difficult to correct coma aberration occurring in the third lens group. Hence, satisfying conditional formula (4) makes it possible to achieve further compactness and higher performance of the zoom lens system in a balanced manner.

It is further desirable to satisfy conditional formula (4a) below:

$$-2.0 < f3/f1 < -1.1 \qquad (4a)$$

Conditional formula (4a) specifies, in the range of the conditions specified by conditional formula (4) described above, a more preferable range of conditions based on the above-described viewpoints, etc. Hence, it is preferable to satisfy conditional formula (4a), which makes it possible to further enhance the above-described advantages.

The zoom lens system described above satisfies conditional formula (5) below:

$$0.75 < M4/M3 < 0.95 \qquad (5)$$

where

M4 represents an amount of movement of the fourth lens group on the optical axis during magnification variation from the wide angle end to the telephoto end; and
M3 represents an amount of movement of the third lens group on the optical axis during magnification variation from the wide angle end to the telephoto end.

Under the lower limit of conditional formula (5), the distance between the third and fourth lens groups varies so greatly that spherical aberration variation during magnification variation increases. Reversely, over the upper limit of conditional formula (5), the distance between the third and fourth lens groups varies so slightly that it becomes difficult to sufficiently obtain the effect of correcting field curvature variation due to magnification variation. Hence, satisfying conditional formula (5) makes it possible to achieve higher performance with respect to spherical aberration and field curvature during zooming in a balanced manner.

It is further desirable to satisfy conditional formula (5a) below:

$$0.8 < M4/M3 < 0.9 \qquad (5a)$$

Conditional formula (5a) specifies, in the range of the conditions specified by conditional formula (5) described above, a more preferable range of conditions based on the above-described viewpoints, etc. Hence, it is preferable to satisfy conditional formula (5a), which makes it possible to further enhance the above-described advantages.

It is desirable for the third lens group to include two cemented lens elements arranged adjacent to each other such that an object-side one of them has a cemented surface concave to the object side and an image-side one has a cemented surface concave to the image side. By arranging the cemented surfaces having greatly different refraction indices to face in opposite directions in the third lens group, where axial ray height and off-axial ray height both vary greatly, it is possible to facilitate independent correction of spherical aberration, coma aberration, and astigmatism. Specifically, with the cemented surface on the object side, where the axial-ray height is higher than in the image-side cemented lens element, facing in a direction toward a stop, it is possible to perform aberration correction by placing emphasis on spherical aberration and coma aberration rather than astigmatism, and with the cemented surface of the image side, where the axial ray height is lower and the off-axial ray height is higher, facing in a direction opposite to the stop, it is possible to perform correction of astigmatism without greatly affecting spherical aberration or coma aberration.

It is preferable for the fourth lens group to include at least one positive lens element made of a glass material that satisfies conditional formula (6) below:

$$\Delta Pgf > 0.01 \qquad (6)$$

where

$$\Delta Pgf = Pgf + 0.0018 \times Vd - 0.64842;$$

$$Pgf = (ng - nF)/(nF - nC);$$

$$Vd = (nd - 1)/(nF - nC);$$

nd represents a refractive index for the d-line;
ng represents a refractive index for the g-line;
nF represents a refractive index for the F-line; and
nC represents a refractive index for the C-line.

By using a material that satisfies conditional formula (6) in a positive lens element arranged in the fourth lens group, where the off-axial ray height is high, it is possible to shift the g-line lateral chromatic aberration at the wide angle end to an image-height minus side. Generally, correction of lateral chromatic aberration in a wide-angle lens system is performed by balancing the g-line and the C-line on a plus side with respect to the e-line, and thus, by shifting g-line lateral chromatic aberration to the image-height minus side, it is possible to effectively correct a secondary spectrum.

The zoom lens systems described hereinabove are suitably used as an imaging lens system for a digital apparatus (for example, a lens interchangeable digital camera) equipped with an image input function. By combining the zoom lens systems with an imaging element, etc., it is possible to achieve an imaging optical device which optically captures an image of a subject and outputs an electrical signal. The imaging optical device is an optical device constituting a main component of a camera used for shooting a still image or a moving image of a subject. For example, the imaging optical device is constituted by including, in order from the object (i.e., subject) side, a zoom lens system that forms an optical image of an object and an imaging element (an image sensor) that converts the optical image formed by the zoom lens system into an electrical signal. By disposing the zoom lens system having the features as described above such that an optical image of the subject is formed on a light receiving surface (that is, an imaging surface) of the imaging element, it is possible to achieve a compact, low-cost, and high-performance imaging optical device, and a digital apparatus including such an imaging optical device.

Examples of the digital apparatus having the image input function include cameras such as a digital camera, a video camera, a monitoring camera, a security camera, a vehicle-mounted camera, and a TV telephone camera. The examples also include such ones of the following as have a camera function incorporated or externally provided: a personal computer, a portable digital apparatus (for example, a mobile phone, a smart phone (high-performance mobile phone), a tablet terminal, and a mobile computer), their peripheral devices (such as a scanner, a printer, and a mouse), and other digital apparatuses (such as a drive recorder and national defense equipment). As is clear from these examples, it is possible not only to constitute a camera by using an imaging optical device, but also to equip various types of apparatuses with a camera function by incorporating an imaging optical device therein. For example, it is possible to constitute a digital apparatus having an image input function, such as a camera-equipped mobile phone.

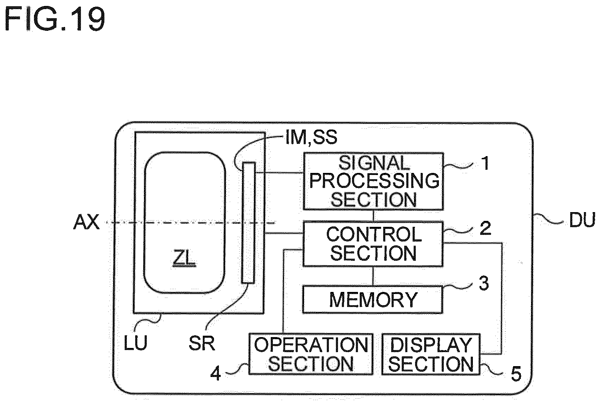

FIG. 19 is a schematic sectional view showing in outline a configuration example of a digital apparatus DU as an example of the digital apparatus having the image input function. An imaging optical device LU incorporated in the digital apparatus DU shown in FIG. 19 includes, in order from the object (i.e., object) side, a zoom lens system ZL (AX representing the optical axis) which forms an optical image (the image surface) IM of an object in a magnification-variable manner, and an imaging element SR which converts the optical image IM formed by the zoom lens system ZL on the light receiving surface (the imaging surface) SS into an electrical signal. A plane-parallel plate (a cover glass of the imaging element SR, for example, which corresponds to an optical filter such as an optical low-pass filter or an infrared cut filter disposed as necessary) is also provided as necessary.

When the digital apparatus DU having an image input function is constituted with the imaging optical device LU, the imaging optical device LU is generally disposed within a body of the digital apparatus DU, and a design which is appropriate to achieve a camera function can be adopted. For example, the imaging optical device LU formed as a unit may be rotatable with respect to a main body of the digital apparatus DU, or may be attachable and detachable to and from the main body of the digital apparatus DU (an interchangeable lens camera) as an interchangeable lens system having an image sensor.

The zoom lens system ZL includes four negative, positive, positive, and negative lens groups, and is configured to perform magnification variation (or, zooming) by varying an axial group-to-group distance, to perform focusing by moving a positive sub lens group (the second-a lens group) included in the second lens group along the optical axis AX, and to form an optical image IM on the light receiving surface SS of the imaging element SR. Used as the imaging element SR is, for example, a solid-state imaging element having a plurality of pixels, such as a CCD (Charge Coupled Device) image sensor or a CMOS (Complementary Metal-Oxide Semiconductor) image sensor. Since the zoom lens system ZL is disposed such that the optical image IM of the subject is formed on the light receiving surface SS, which is a photoelectric conversion section of the imaging element SR, the optical image IM formed by the zoom lens system ZL is converted into an electrical signal by the imaging element SR.

The digital apparatus DU includes, in addition to the imaging optical device LU, a signal processing section 1, a control section 2, a memory 3, an operation section 4, and a display section 5, for example. The signal generated by the imaging element SR is subjected to predetermined digital image processing, image compression processing, etc., as necessary, in the signal processing section 1, and then, the signal is recorded as a digital image signal in the memory 3 (a semiconductor memory, an optical disc, or the like), or may be transmitted to another apparatus via a cable or by being converted into an infrared signal or the like (as in the communication function of a mobile phone, for example). The control section 2 is constituted by a microcomputer, and intensively performs, for example, control of functions such as a shooting function (including a function of shooting a still image and a function of shooting a moving image) and an image reproduction function, and control of lens movement mechanisms for zooming, focusing and camera-shake correction, etc. For example, the control section 2 controls the imaging optical device LU such that at least one of shooting of a still image of the subject and shooting of a moving image of the subject is performed. The display section 5 is a section that includes a display such as a liquid crystal monitor, and displays an image by using the image signal resulting from the conversion performed by the imaging element SR or the image information recorded in the memory 3. The operation section 4 is a section that includes operation members such as an operation button (for example, a release button) and an operation dial (for example, a shooting mode dial), and transmits information input by an operator to the control section 2.

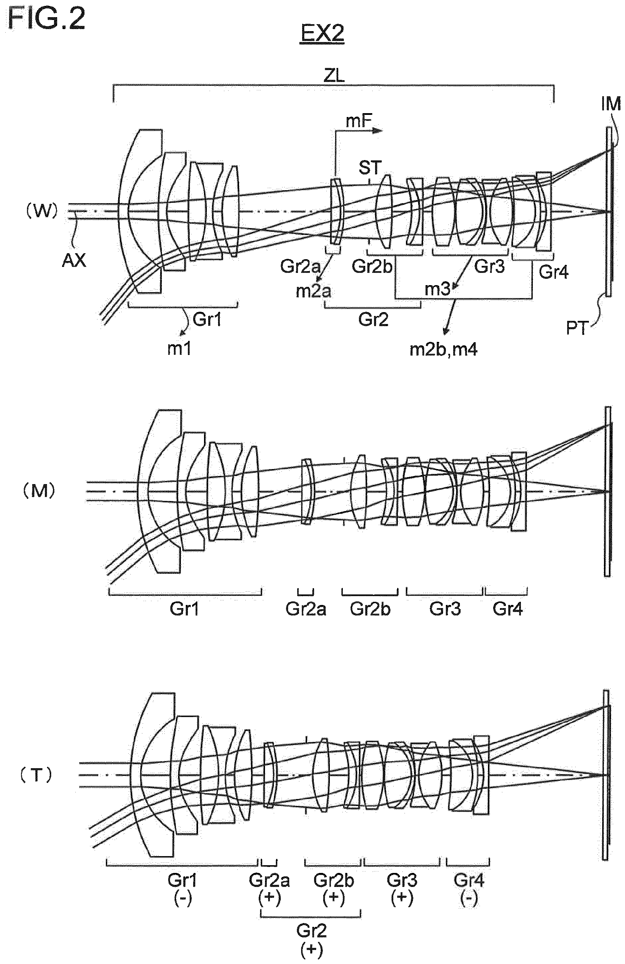

Next, further detailed descriptions will be given of specific optical configurations of the zoom lens system ZL, by means of second to sixth embodiments. FIG. 2 to FIG. 6 are optical configuration diagrams respectively corresponding to the zoom lens systems ZL constituting the second to sixth embodiments. They are optical sectional views showing lens arrangements, optical paths, etc. at the wide angle end (W), in a middle focal length state (M), and at the telephoto end (T). In the optical configuration diagrams, arrows m1, m2, m2a, m2b, m3, m4, and m5 respectively indicate, in a schematic manner, movements of the first lens group Gr1, the second lens group Gr2, the second-a lens group Gr2a, the second-b lens group Gr2b, the third lens group Gr3, the fourth lens group Gr4, and the fifth lens group Gr5 during zooming from the wide angle end (W) to the telephoto end (T), and arrow mF schematically indicates movement of the second-a lens group Gr2a during focusing from infinite to a nearby object.

Each of the second to sixth embodiments (FIGS. 2 to 6) includes, in order from the object side, the first lens group Gr1 having a negative optical power, the second lens group Gr2 having a positive optical power, the third lens group Gr3 having a positive optical power, and the fourth lens group Gr4 having a negative optical power, and during magnification variation from the wide angle end (W) to the telephoto end (T), at least the first to fourth lens groups Gr1 to Gr4 each move along the optical axis AX such that the distance between the first lens group Gr1 and the second lens group Gr2 is reduced, the distance between the second lens group Gr2 and the third lens group Gr3 is reduced, and the distance between the third lens group Gr3 and the fourth lens group Gr4 is increased. The second lens group Gr2 includes, in order from the object side, the second-a lens group Gr2a and the second-b lens group Gr2b. The second-a lens group Gr2a has a positive optical power, and performs focusing to a nearby object by moving along the optical axis AX toward the image side (as indicated by arrow mF). The stop (aperture stop) ST is located at the most object-side position in the second-b lens group Gr2b, and moves as a part of the second-b lens group Gr2b during magnification variation. Here, the plane-parallel plate PT is disposed between the zoom lens system ZL and the image surface IM.

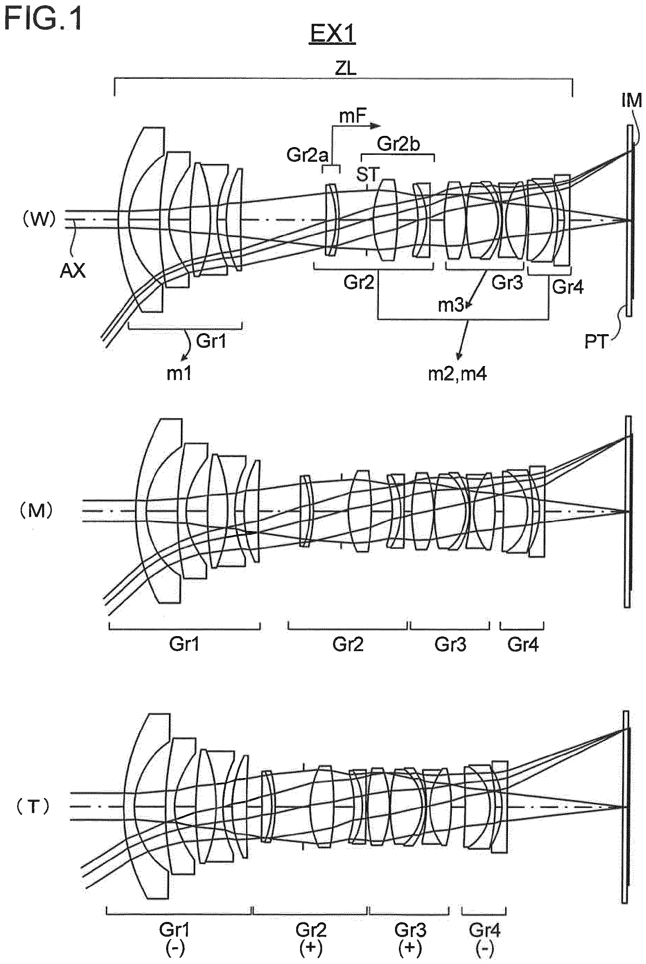

The first illustrative example (FIG. 1) of a zoom lens system that is not part of the invention is a four-group zoom system with a negative-positive-positive-negative optical power arrangement, having a zoom configuration in which the first lens group Gr1, the second lens group Gr2, the third lens group Gr3, and the fourth lens group Gr4 each move relatively with respect to the image surface IM during zooming. During magnification variation from the wide angle end (W) to the telephoto end (T), the first lens group Gr1 once moves toward the image side and then returns toward the object side (arrow m1), and the second lens group Gr2, the third lens group Gr3, and the fourth lens group Gr4 each monotonously move toward the object side (arrows m2 to m4). Here, the second lens group Gr2 and the fourth lens group Gr4 are so linked with each other as to move integrally with each other (arrows m2, m4).

The second to fifth embodiments (FIG. 2 to FIG. 5) of the zoom lens system ZL is a four-group zoom system with a negative-positive-positive-negative optical power arrangement, having a negative-positive-positive-positive-negative zoom configuration in which the first lens group Gr1, the second-a lens group Gr2a, the second-b lens group Gr2b, the third lens group Gr3, and the fourth lens group Gr4 each move relatively with respect to the image surface IM during zooming. During magnification variation from the wide angle end (W) to the telephoto end (T), the first lens group Gr1 once moves toward the image side and then returns toward the object side (arrow m1), and the second-a lens group Gr2a, the second-b lens group Gr2b, the third lens group Gr3, and the fourth lens group Gr4 each monotonously move toward the object side (arrows m2a, m2b, m3, m4). Here, the second-b lens group Gr2b and the fourth lens group Gr4 are so linked with each other as to move integrally with each other (arrows m2b, m4).

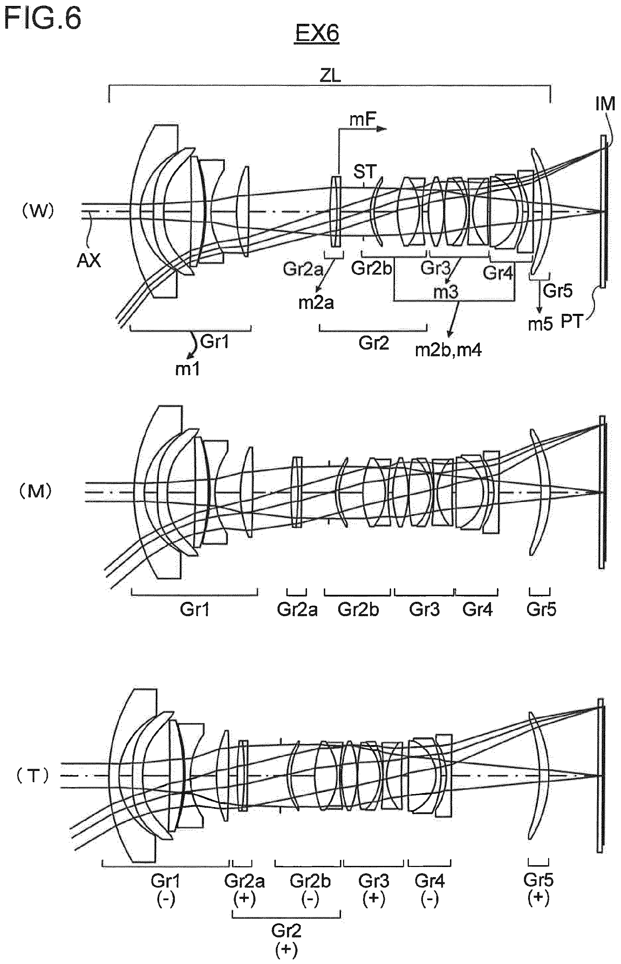

The sixth embodiment (FIG. 6) of the zoom lens system ZL is a five-group zoom system with a negative-positive-positive-negative-positive optical power arrangement, having a negative-positive-negative-positive-negative-positive zoom configuration in which, with the fifth lens group Gr5 remaining stationary, the first lens group Gr1, the second-a lens group Gr2a, the second-b lens group Gr2b, the third lens group Gr3, and the fourth lens group Gr4 each move relatively with respect to the image surface IM during zooming. During magnification variation from the wide angle end (W) to the telephoto end (T), the first lens group Gr1 once moves toward the image side and then returns toward the object side (arrow ml), and the second-a lens group Gr2a, the second-b lens group Gr2b, the third lens group Gr3, and the fourth lens group Gr4 each monotonously move toward the object side (arrows m2a, m2b, m3, m4). Here, the second-b lens group Gr2b and the fourth lens group Gr4 are so linked with each other as to move integrally with each other (arrows m2b, m4).

According to the first illustrative example (FIG. 1), the lens groups are configured as follows in order from the object side, as seen in paraxial surface shape. The first lens group Gr1 is composed of a negative meniscus lens element concave to the image side, a negative meniscus lens element having aspherical surfaces on both sides and concave to the image side, a cemented lens element including a biconvex positive lens element and a biconcave negative lens element, and a positive meniscus lens element convex to the object side. The second-a lens group Gr2a is composed of a cemented lens element including a positive meniscus lens element convex to the image side and a negative meniscus lens element concave to the object side. The second-b lens group Gr2b is composed of the stop ST, a biconvex positive lens element, and a cemented lens element including a positive meniscus lens element convex to the image side and a negative meniscus lens element concave to the object side. The third lens group Gr3 is composed of a biconvex positive lens element having aspherical surfaces on both sides, a cemented lens element including a biconvex positive lens element and a negative meniscus lens element concave to the object side, and a cemented lens element including a biconcave negative lens element and a biconvex positive lens element. Accordingly, an object-side one of the two adjacent cemented lens elements has a cemented surface concave to the object side, and an image-side one has a cemented surface concave to the image side. The fourth lens group Gr4 is composed of a cemented lens element including a positive meniscus lens element convex to the image side and a negative meniscus lens element concave to the object side, and a plano-concave lens element concave to the object side.

According to the second embodiment (FIG. 2), the lens groups are configured as follows in order from the object side, as seen in paraxial surface shape. The first lens group Gr1 is composed of a negative meniscus lens element concave to the image side, a negative meniscus lens element having aspherical surfaces on both sides and concave to the image side, a cemented lens element including a biconvex positive lens element and a biconcave negative lens element, and a biconvex positive lens element. The second-a lens group Gr2a is composed of a cemented lens element including a positive meniscus lens element convex to the image side and a negative meniscus lens element concave to the object side. The second-b lens group Gr2b is composed of the stop ST, a biconvex positive lens element, and a cemented lens element including a positive meniscus lens element convex to the image side and a negative meniscus lens element concave to the object side. The third lens group Gr3 is composed of a biconvex positive lens element having aspherical surfaces on both sides, a cemented lens element including a biconvex positive lens element and a negative meniscus lens element concave to the object side, and a cemented lens element including a biconcave negative lens element and a biconvex positive lens element. Accordingly, an object-side one of the two adjacent cemented lens elements has a cemented surface concave to the object side, and an image-side one has a cemented surface concave to the image side. The fourth lens group Gr4 is composed of a cemented lens element including a positive meniscus lens element convex to the image side and a negative meniscus lens element concave to the object side, and a plano-concave lens element concave to the object side.

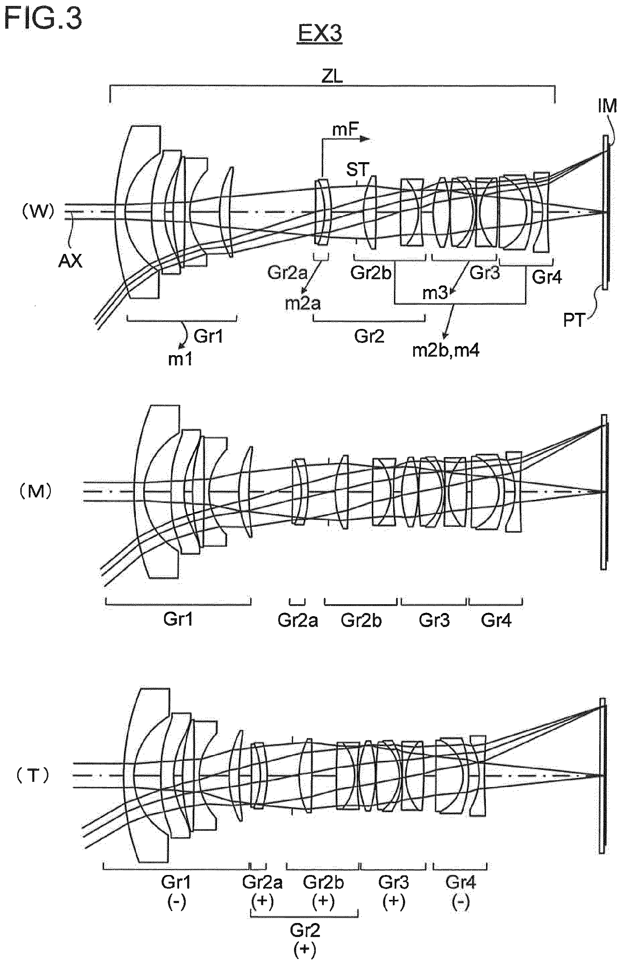

According to the third embodiment (FIG. 3), the lens groups are configured as follows in order from the object side, as seen in paraxial surface shape. The first lens group Gr1 is composed of a negative meniscus lens element concave to the image side, a negative meniscus lens element having aspherical surfaces on both sides and concave to the image side, a cemented lens element including a biconvex positive lens element and a biconcave negative lens element, and a positive meniscus lens element convex to the object side. The second-a lens group Gr2a is composed of a cemented lens element including a positive meniscus lens element convex to the image side and a negative meniscus lens element concave to the object side. The second-b lens group Gr2b is composed of the stop ST, a biconvex positive lens element, and a cemented lens element including a biconvex positive lens element and a biconcave negative lens element. The third lens group Gr3 is composed of a biconvex positive lens element having aspherical surfaces on both sides, a cemented lens element including a biconvex positive lens element and a negative meniscus lens element concave to the object side, and a cemented lens element including a biconcave negative lens element and a biconvex positive lens element. Accordingly, an object-side one of the two adjacent cemented lens elements has a cemented surface concave to the object side, and an image-side one has a cemented surface concave to the image side. The fourth lens group Gr4 is composed of a cemented lens element including a positive meniscus lens element convex to the image side and a negative meniscus lens element concave to the object side, and a biconcave negative lens element.

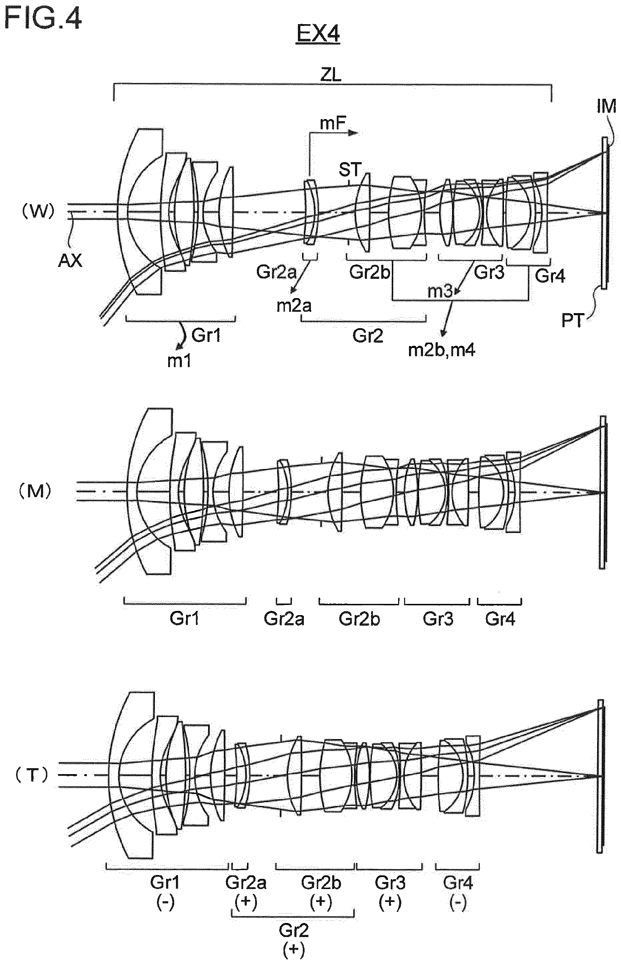

According to the fourth embodiment (FIG. 4), the lens groups are configured as follows in order from the object side, as seen in paraxial surface shape. The first lens group Gr1 is composed of a negative meniscus lens element concave to the image side, a negative meniscus lens element having aspherical surfaces on both sides and concave to the image side, a biconvex positive lens element, a biconcave negative lens element, and a biconvex positive lens element. The second-a lens group Gr2a is composed of a cemented lens element including a positive meniscus lens element convex to the image side and a negative meniscus lens element concave to the object side. The second-b lens group Gr2b is composed of the stop ST, a biconvex positive lens element, and a cemented lens element including a biconvex positive lens element and a biconcave negative lens element. The third lens group Gr3 is composed of a biconvex positive lens element having aspherical surfaces on both sides, a cemented lens element including a biconvex positive lens element and a negative meniscus lens element concave to the object side, and a cemented lens element including a biconcave negative lens element and a biconvex positive lens element. Accordingly, an object-side one of the two adjacent cemented lens elements has a cemented surface concave to the object side, and an image-side one has a cemented surface concave to the image side. The fourth lens group Gr4 is composed of a cemented lens element including a biconvex positive lens element and a negative meniscus lens element concave to the object side, and a biconcave negative lens element.

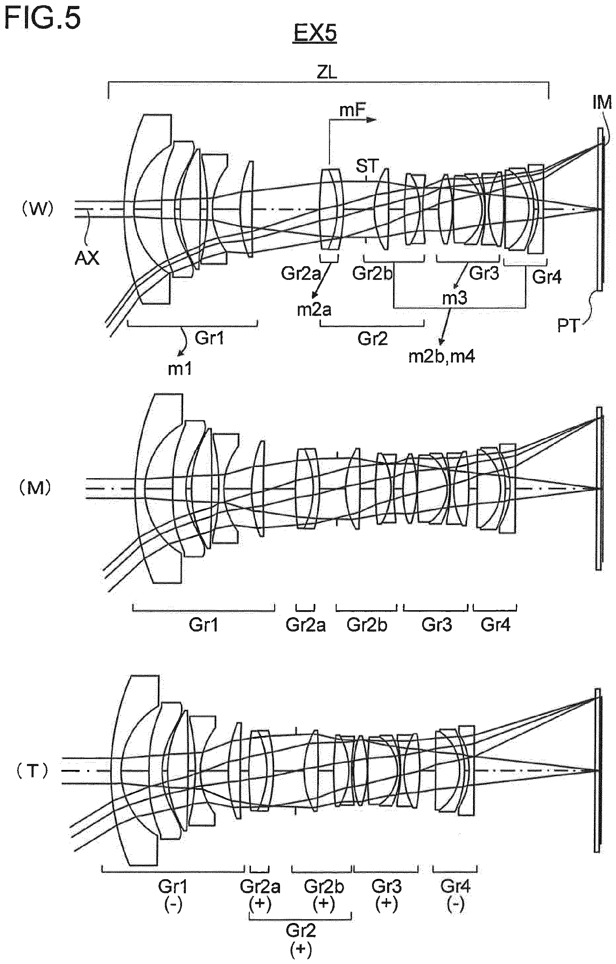

According to the fifth embodiment (FIG. 5), the lens groups are configured as follows in order from the object side, as seen in paraxial surface shape. The first lens group Gr1 is composed of a negative meniscus lens element concave to the image side, a negative meniscus lens element having aspherical surfaces on both sides and concave to the image side, a biconvex positive lens element, a biconcave negative lens element, and a positive meniscus lens element convex to the object side. The second-a lens group Gr2a is composed of a cemented lens element including a biconvex positive lens element and a negative meniscus lens element concave to the object side. The second-b lens group Gr2b is composed of the stop ST, a biconvex positive lens element, and a cemented lens element including a biconvex positive lens element and a biconcave negative lens element. The third lens group Gr3 is composed of a biconvex positive lens element having aspherical surfaces on both sides, a cemented lens element including a biconvex positive lens element and a negative meniscus lens element concave to the object side, and a cemented lens element including a biconcave negative lens element and a biconvex positive lens element. Accordingly, an object-side one of the two adjacent cemented lens elements has a cemented surface concave to the object side, and an image-side one has a cemented surface concave to the image side. The fourth lens group Gr4 is composed of a cemented lens element including a positive meniscus lens element convex to the object side and a negative meniscus lens element concave to the object side, and a biconcave negative lens element.

According to the sixth embodiment (FIG. 6), the lens groups are configured as follows in order from the object side, as seen in paraxial surface shape. The first lens group Gr1 is composed of a negative meniscus lens element concave to the image side, a negative meniscus lens element having aspherical surfaces on both sides and concave to the image side, a positive meniscus lens element convex to the image side, a biconcave negative lens element, and a biconvex positive lens element. The second-a lens group Gr2a is composed of a cemented lens element including a biconvex positive lens element and a plano-concave lens element concave to the object side. The second-b lens group Gr2b is composed of the stop ST, a positive meniscus lens element convex to the object side, and a cemented lens element including a biconvex positive lens element and a biconcave negative lens element. The third lens group Gr3 is composed of a biconvex positive lens element having aspherical surfaces on both sides, a cemented lens element including a biconvex positive lens element and a negative meniscus lens element concave to the object side, and a cemented lens element including a biconcave negative lens element and a positive meniscus lens element convex to the object side. Accordingly, an object-side one of the two adjacent cemented lens elements has a cemented surface concave to the object side, and an image-side one has a cemented surface concave to the image side. The fourth lens group Gr4 is composed of a cemented lens element including a biconvex positive lens element and a negative meniscus lens element concave to the object side, and a biconcave negative lens element. The fifth lens group Gr5 is composed of a positive meniscus lens element convex to the image side.

## EXAMPLES

Hereinafter, the configuration and other features of each of zoom lens systems to which the present invention is applied will be described in more detail with reference to construction data etc. of examples. Examples 2 to 6 (EX2 to EX6) presented below are numerical examples corresponding to the second to sixth embodiments described above, respectively, and optical configuration diagrams (FIG. 2 to FIG. 6) respectively showing the second to sixth embodiments each illustrate the lens arrangement, optical paths, etc. of a corresponding one of Examples 2 to 6. Numerical example corresponding to the first illustrative example (Example 1, EX1) that is not part of the invention is also given, as well as the corresponding optical configuration diagram of FIG. 1.

In the construction data of each example, listed as surface data are, from the leftmost column rightward, surface number, radius of curvature r (mm), axial surface-to-surface distance d (mm), index of refraction nd for the d-line (with a wavelength of 587.56 nm), and Abbe number vd for the d-line. A surface whose surface number is marked with an asterisk "*" is an aspherical surface, of which the surface shape is defined by formula (AS) below based on a local rectangular coordinate system (x, y, z) having an origin at the vertex of the surface. Listed as aspherical surface data are aspherical surface coefficient, etc. In the aspherical surface data of each example, the coefficient of the term that is not shown is zero, and for all the data, E - n = $\times 10^{-n}$.

$$z = (c \cdot h^2)/[1 + \sqrt{\{1 - (1 + K) \cdot c^2 \cdot h^2\}}] + \sum(Aj \cdot h^j) \qquad (AS)$$

where

  h represents a height in a direction perpendicular to a z-axis (the optical axis AX) ($h^2 = x^2 + y^2$);
  z represents an amount of sag in the optical axis AX direction (relative to the vertex of the surface) at a height h;
  c represents a curvature (the reciprocal of a radius of curvature r) at the vertex of the surface;
  K represents a conic constant; and
  Aj represents an aspherical surface coefficient of order j.

As miscellaneous data, zoom ratio (magnification variation ratio) is presented, and furthermore, with respect to each of the focal length states W, M and T, focal length (mm) of the entire system, F-number, half angle of view (°), ideal image height (mm), total lens length (mm), back focus (BF, mm) and variable surface-to-surface distance di (i: surface number, mm) during zooming (infinite shooting distance) and during focusing (shooting distance of 350 mm) are presented. Presented as zoom lens group data are focal lengths (mm) of the lens groups, namely, the focal length f1 of the first lens group Gr1, the focal length f2 of the second lens group Gr2 (or, the focal length f2a of the second-a lens group Gr2a, the focal length f2b of the second-b lens group Gr2b), the focal length f3 of the third lens group Gr3, the focal length f4 of the fourth lens group Gr4, and the focal length f5 of the fifth lens group Gr5. Note that herein the back focus BF denotes the distance from the image-side surface of the plane-parallel plate PT to the image surface IM, and the total lens length denotes the distance from the foremost lens surface to the image surface IM. In Table 1, data related to the conditional formulae are presented with respect to each of the examples. In Table 2, values corresponding to the conditional formulae are presented with respect to each of the examples.

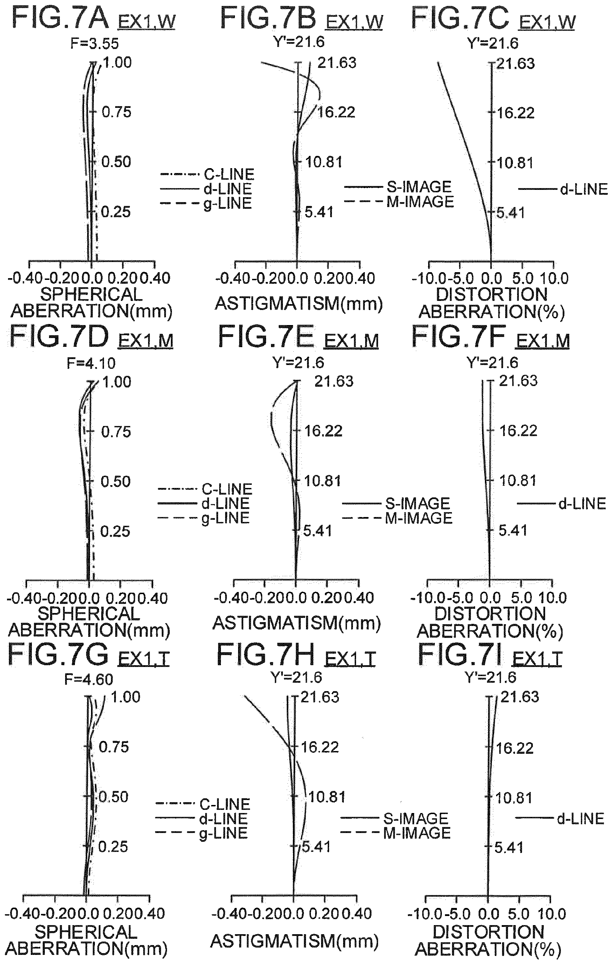

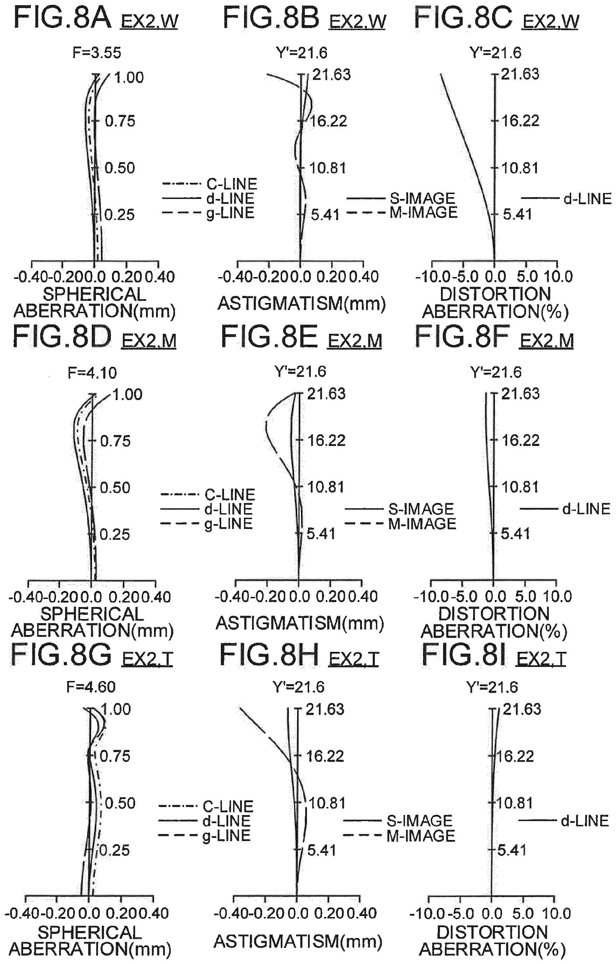

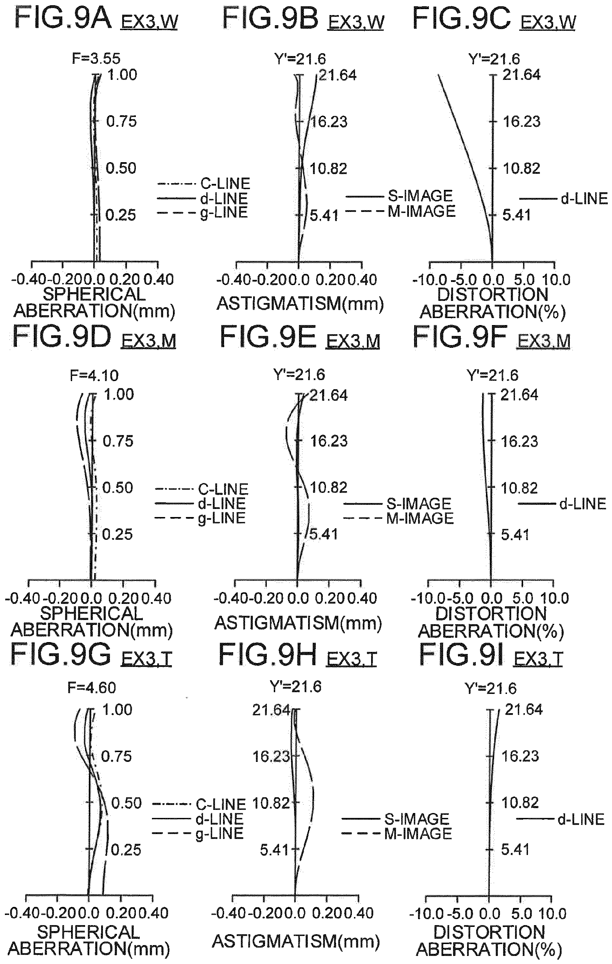

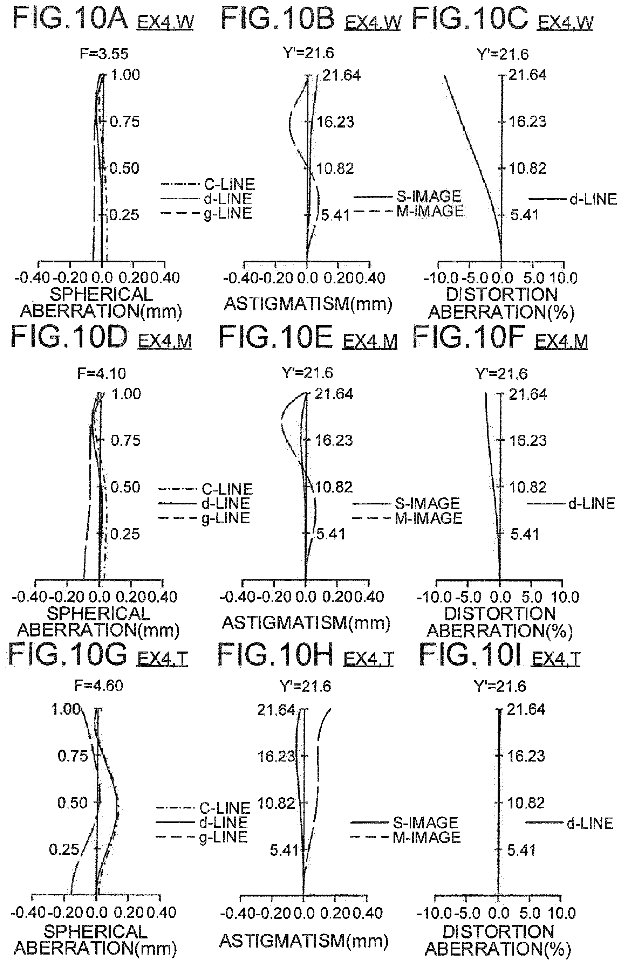

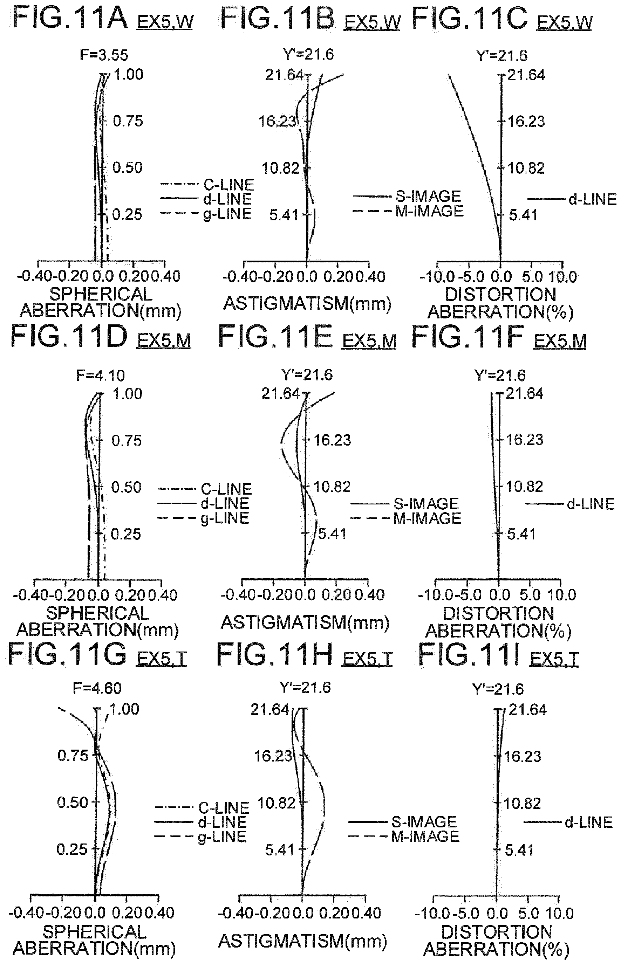

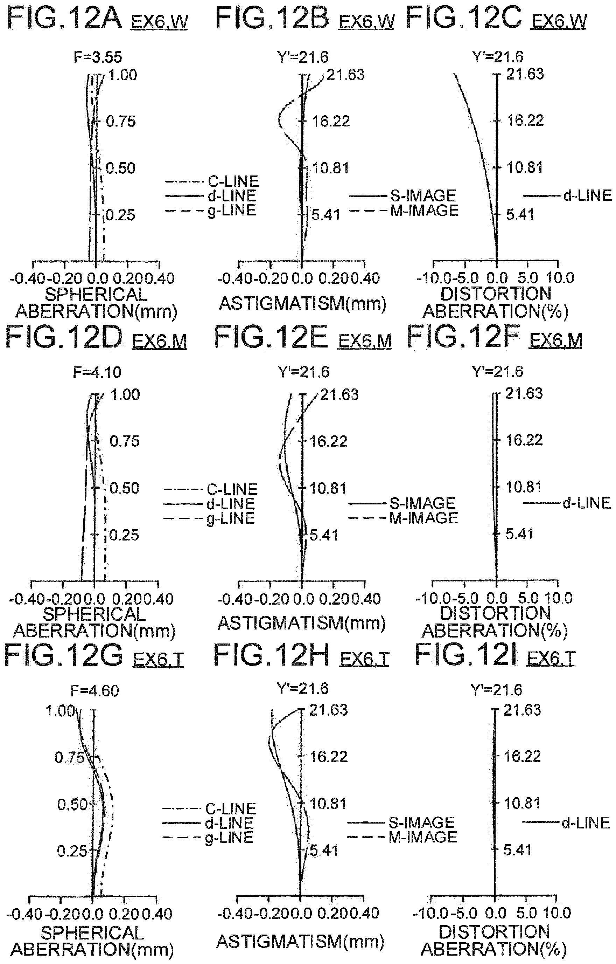

FIGS. 7A to 7I, FIGS. 8A to 8I, FIGS. 9A to 9I, FIGS. 10A to 10I, FIGS. 11A to 11I, and FIGS. 12A to 12I are aberration diagrams (longitudinal aberration diagrams in an infinity in-focus state) respectively corresponding to Example 1 to Example 6 (EX1 to EX6). FIGS. 7A to 7C, FIGS. 8A to 8C, FIGS. 9A to 9C, FIGS. 10A to 10C, FIGS. 11A to 11C, and FIGS. 12A to 12C show various aberrations at the wide angle end W. FIGS. 7D to 7F, FIGS. 8D to 8F, FIGS. 9D to 9F, FIGS. 10D to 10F, FIGS. 11D to 11F, and FIGS. 12D to 12F show various aberrations in a middle focal length state M. FIGS. 7G to 7I, FIGS. 8G to 8I, FIGS. 9G to 9I, FIGS. 10G to 10I, FIGS. 11G to 11I, and FIGS. 12G to 12I show various aberrations at the telephoto end T. FIGS. 7A, 7D, and 7G, FIGS. 8A, 8D, and 8G, FIGS. 9A, 9D, and 9G, FIGS. 10A, 10D, and 10G, FIGS. 11A, 11D, and 11G, and FIGS. 12A, 12D, and 12G are spherical aberration diagrams. FIGS. 7B, 7E, and 7H, FIGS. 8B, 8E, and 8H, FIGS. 9B, 9E, and 9H, FIGS. 10B, 10E, and 10H, FIGS. 11B, 11E, and 11H, and FIGS. 12B, 2E, and 12H are astigmatism diagrams. FIGS. 7C, 7F, and 7I, FIGS. 8C, 8F, and 8I, FIGS. 9C, 9F, and 9I, FIGS. 10C, 10F, and 10I, FIGS. 11C, 11F, and 11I, and FIGS. 12C, 12F, 12I are distortion aberration diagrams.

In the spherical aberration diagrams, a solid line represents the amount of spherical aberration for the d-line (with a wavelength of 587.56 nm), a dash-and-dot line represents the amount of spherical aberration for the C-line (with a wavelength of 656.28 nm), and a dashed line represents the amount of spherical aberration for the g-line (with a wavelength of 435.84 nm), all in terms of deviations (mm) from a paraxial image surface in the optical axis AX direction, a vertical axis representing height of incidence at a pupil as normalized with respect to a maximum height of incidence (corresponding to F-number) (that is, the vertical axis represents relative pupil height). In the astigmatism diagrams, a dashed line M represents meridional image surface for the d-line, and a solid line S represents sagittal image surface for the d-line, both in terms of deviations (mm) from the paraxial image surface in the optical axis AX direction, a vertical axis represents image height (Y', mm). In the distortion aberration diagrams, a horizontal axis represents distortion (%) for the d-line, and a vertical axis represents image height (Y', mm).

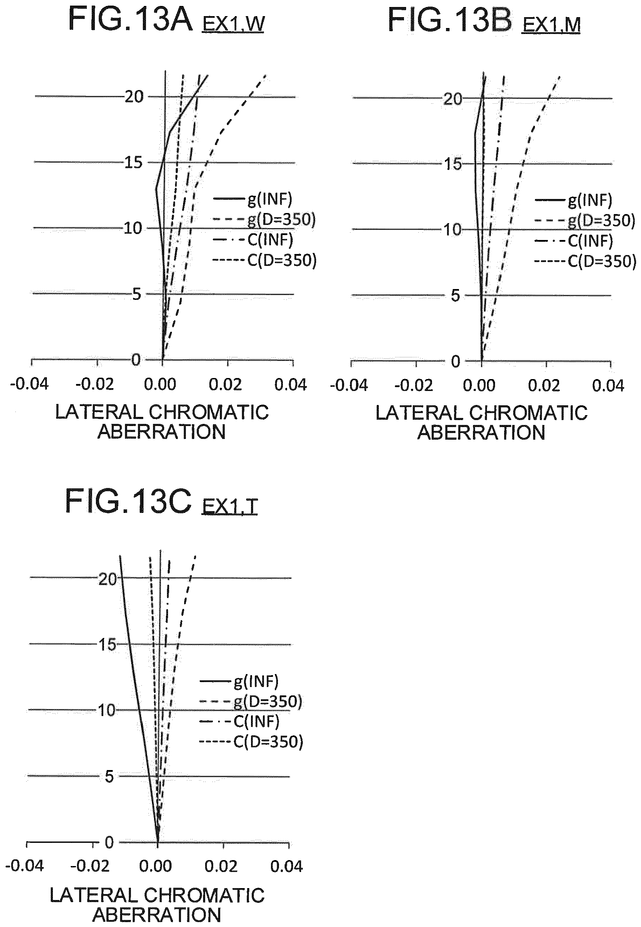

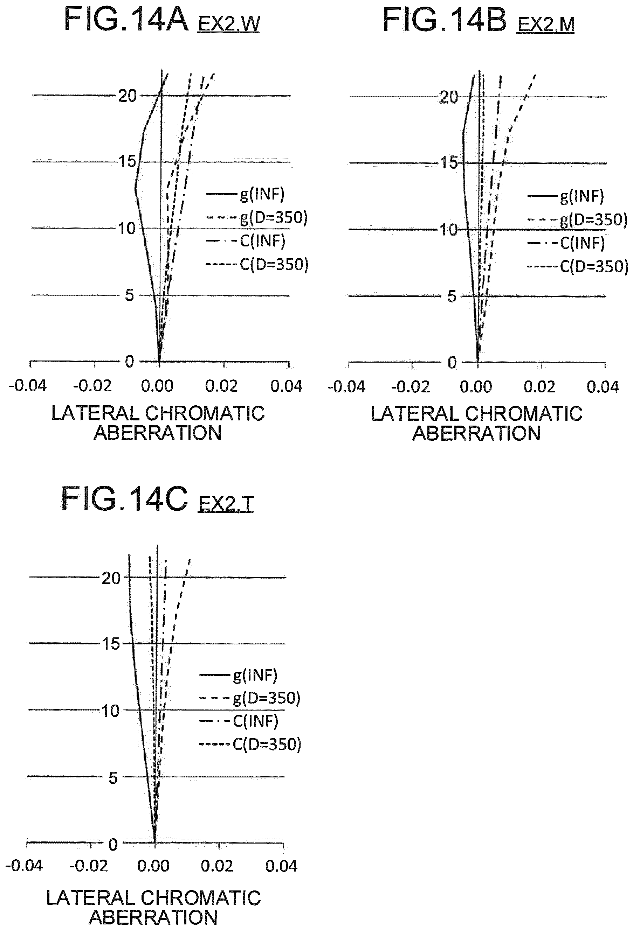

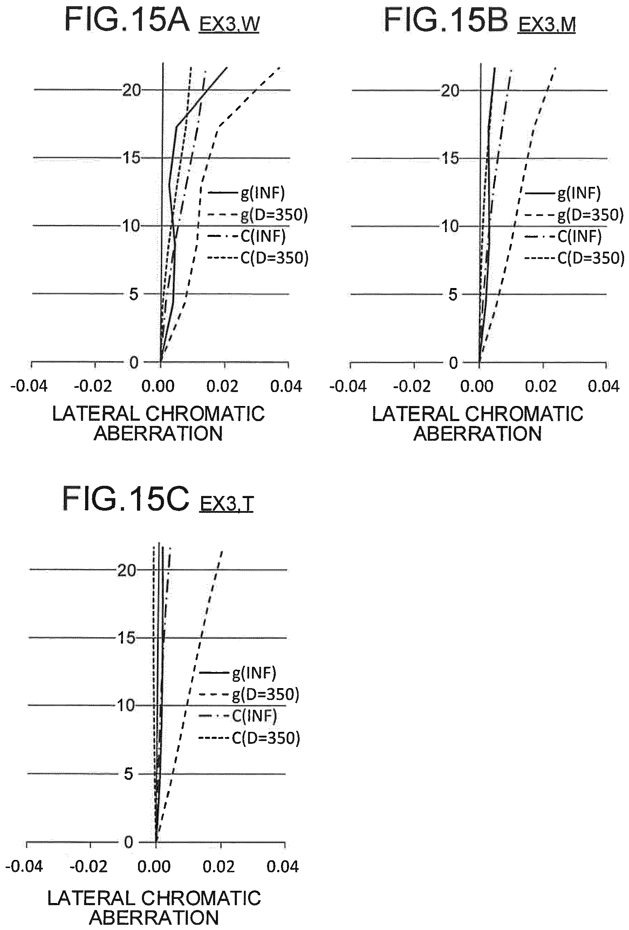

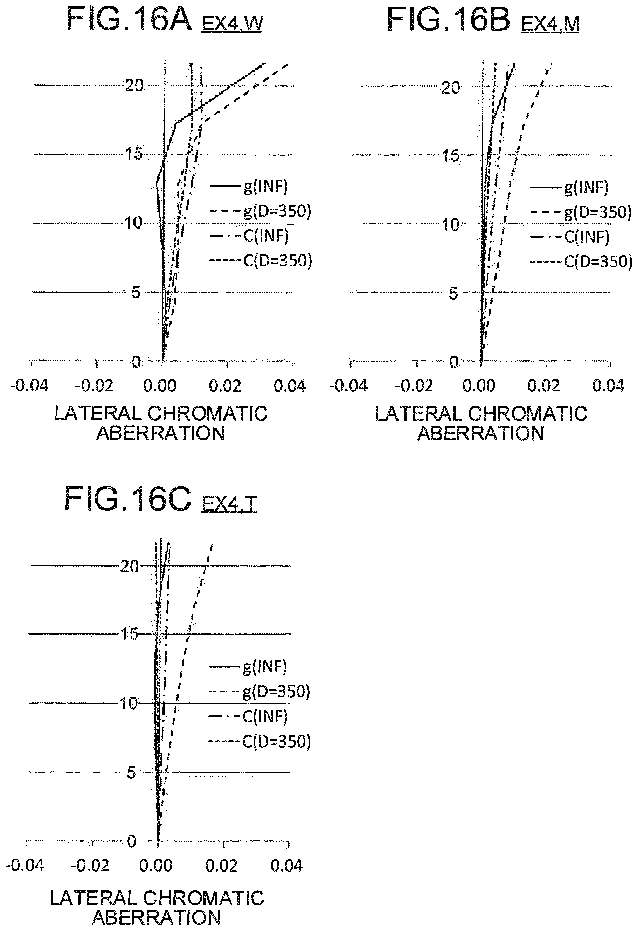

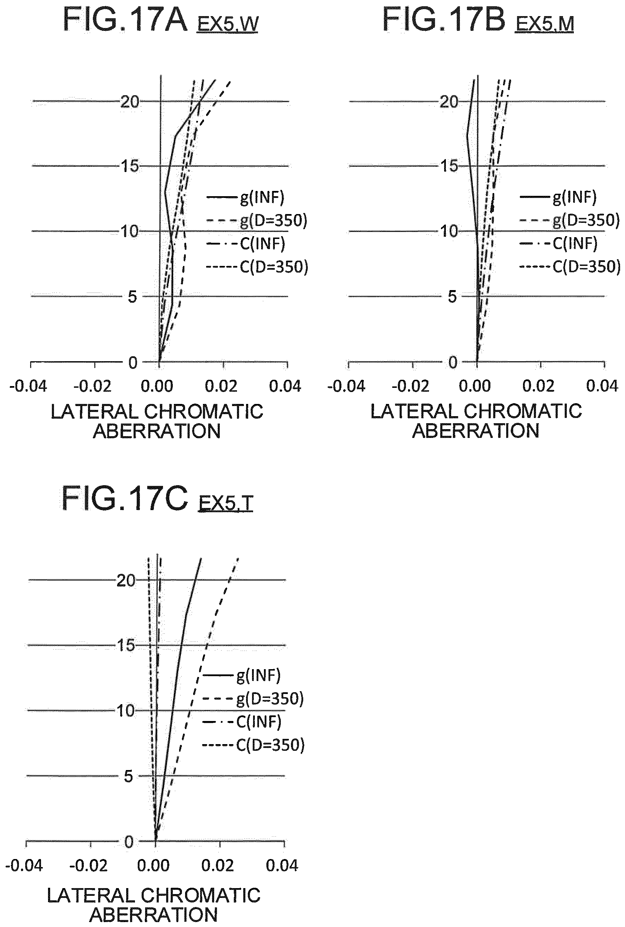

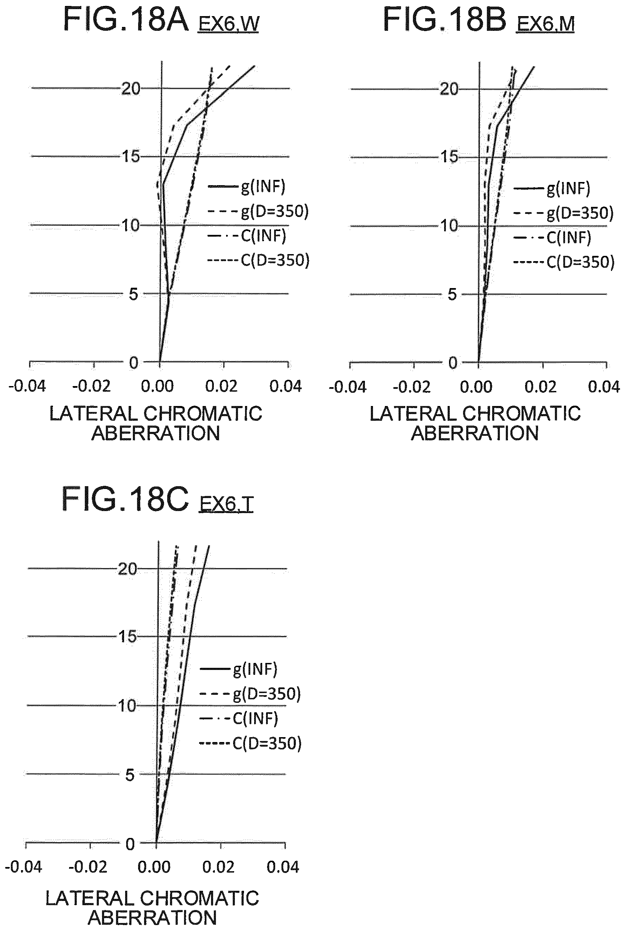

FIGS. 13A to 13C, FIGS. 14A to 14C, FIGS. 15A to 15C, FIGS. 16A to 16C, FIGS. 17A to 17C, and FIGS. 18A to 18C are lateral chromatic aberration diagrams respectively corresponding to Example 1 to Example 6 (EX1 to EX6). FIG. 13A, FIG. 14A, FIG. 15A, FIG. 16A, FIG. 17A, and FIG. 18A show lateral chromatic aberration at the wide angle end W. FIG. 13B, FIG. 14B, FIG. 15B, FIG. 16B, FIG. 17B, and FIG. 18B show lateral chromatic aberration in the middle focal length state M. FIG. 13C, FIG. 14C, FIG. 15C, FIG. 16C, FIG. 17C, and FIG. 18C show lateral chromatic aberration at the telephoto end T. In each of the lateral chromatic aberration diagrams, a horizontal axis represents lateral chromatic aberration (mm) and a vertical axis represents image height (Y', mm). In each of the lateral chromatic aberration diagrams, the correspondence between the lines and the wavelengths and the focusing states is as follows:

a solid line represents lateral chromatic aberration for the g-line (with a wavelength of 435.84 nm) at the infinite shooting distance (INF),
a long dashed line represents lateral chromatic aberration for the g-line (with a wavelength of 435.84 nm) at the shooting distance of 350 mm (D = 350),
a dash-dot line represents lateral chromatic aberration for the C-line (with a wavelength of 656.28 nm) at the infinite shooting distance (INF), and
a short dashed line represents lateral chromatic aberration for the C-line (with a wavelength of 656.28 nm) at the shooting distance of 350 mm (D = 350).

**Example 1**

Unit: mm

Surface Data

| Surface number | r | d | nd | vd |
|---|---|---|---|---|
| 1 | 50.203 | 3.000 | 1.83481 | 42.72 |
| 2 | 21.258 | 8.955 | | |
| 3* | 102.763 | 2.500 | 1.58313 | 59.39 |
| 4* | 18.724 | 6.128 | | |
| 5 | 93.020 | 5.786 | 1.64769 | 33.84 |
| 6 | -41.528 | 2.000 | 1.72916 | 54.67 |
| 7 | 29.574 | 2.577 | | |
| 8 | 32.375 | 4.084 | 1.74077 | 27.76 |
| 9 | 296.302 | variable | | |
| 10 | -530.796 | 2.766 | 1.48749 | 70.44 |
| 11 | -25.532 | 1.000 | 1.77250 | 49.62 |
| 12 | -37.316 | 8.055 | | |
| 13(stop) | ∞ | 2.000 | | |
| 14 | 25.829 | 6.719 | 1.48749 | 70.44 |
| 15 | -66.195 | 5.900 | | |
| 16 | -29.265 | 2.417 | 1.76182 | 26.61 |
| 17 | -19.123 | 1.013 | 1.91082 | 35.25 |
| 18 | -540.532 | variable | | |
| 19* | 42.882 | 6.247 | 1.58313 | 59.39 |
| 20* | -25.767 | 0.150 | | |
| 21 | 40.485 | 9.026 | 1.48749 | 70.44 |
| 22 | -13.164 | 1.035 | 1.91082 | 35.25 |
| 23 | -17.975 | 0.150 | | |
| 24 | -42.442 | 1.007 | 1.91082 | 35.25 |
| 25 | 17.617 | 6.060 | 1.51680 | 64.20 |
| 26 | -41.908 | variable | | |
| 27 | -171.418 | 6.994 | 1.92286 | 20.88 |
| 28 | -13.295 | 1.500 | 1.91082 | 35.25 |
| 29 | -42.004 | 1.937 | | |
| 30 | -20.443 | 1.500 | 1.91082 | 35.25 |
| 31 | ∞ | variable | | |
| 32 | ∞ | 1.400 | 1.51680 | 64.20 |

(continued)

| Surface number | r | d | nd | vd |
|---|---|---|---|---|
| 33 | ∞ | 0.500 | | |

Aspherical Surface Data

| | K | A4 | A6 | A8 | A10 |
|---|---|---|---|---|---|
| 3rd surface | 0.0000 | 9.35436E-06 | -2.36867E-08 | -3.81596E-11 | 1.25911E-13 |
| 4th surface | 0.0000 | -1.01736E-05 | -2.73739E-08 | -3.93424E-10 | 5.42735E-13 |
| 19th surface | 0.0000 | -4.72963E-06 | -2.06187E-08 | 8.70833E-10 | -7.66952E-12 |
| 20th surface | 0.0000 | 2.08902E-05 | -2.67501E-08 | 1.02156E-09 | -8.04252E-12 |

Miscellaneous Data

| Zoom ratio | 2.085 | | |
|---|---|---|---|
| | Wide angle (W) | Middle (M) | Telephoto (T) |
| Focal length | 16.400 | 23.700 | 34.200 |
| F-number | 3.550 | 4.100 | 4.600 |
| Half angle of view | 52.830 | 42.385 | 32.312 |
| Ideal image height | 21.630 | 21.630 | 21.630 |
| Total lens length | 147.938 | 142.212 | 144.659 |
| BF | 0.500 | 0.500 | 0.500 |
| d9 | 24.477 | 12.027 | 4.313 |
| d18 | 4.056 | 2.141 | 0.500 |
| d26 | 0.500 | 2.415 | 4.056 |
| d31 | 16.500 | 23.224 | 33.386 |

Shooting distance 350 mm

| d0 | 195.000 | 200.726 | 198.279 |
|---|---|---|---|
| d9 | 26.783 | 14.553 | 7.123 |
| d12 | 5.750 | 5.530 | 5.246 |

Zoom Lens Group Data

| Group | First surface | Focal length |
|---|---|---|
| 1 | 1 | -20.951 |
| 2 | 10 | 80.153 |
| 3 | 19 | 27.378 |
| 4 | 27 | -37.981 |

**Example 2**

Unit: mm

Surface Data

| Surface number | r | d | nd | vd |
|---|---|---|---|---|
| 1 | 57.190 | 3.000 | 1.72916 | 54.66 |
| 2 | 20.909 | 8.809 | | |
| 3* | 100.618 | 2.500 | 1.58313 | 59.39 |
| 4* | 18.750 | 6.448 | | |
| 5 | 166.896 | 5.395 | 1.64769 | 33.84 |
| 6 | -37.509 | 2.000 | 1.74330 | 49.22 |
| 7 | 30.120 | 2.800 | | |
| 8 | 34.303 | 5.030 | 1.64769 | 33.84 |
| 9 | -127.108 | variable | | |
| 10 | -1549.569 | 2.820 | 1.48749 | 70.44 |
| 11 | -26.876 | 1.000 | 1.77250 | 49.62 |
| 12 | -39.670 | variable | | |
| 13 (stop) | ∞ | 2.000 | | |
| 14 | 24.700 | 4.833 | 1.48749 | 70.44 |
| 15 | -95.330 | 5.954 | | |
| 16 | -31.187 | 2.338 | 1.80518 | 25.46 |
| 17 | -20.108 | 1.000 | 1.91082 | 35.25 |
| 18 | -547.902 | variable | | |
| 19* | 41.959 | 6.544 | 1.58313 | 59.39 |
| 20* | -26.157 | 0.150 | | |
| 21 | 36.311 | 8.132 | 1.48749 | 70.44 |
| 22 | -12.697 | 1.003 | 1.91082 | 35.25 |
| 23 | -17.550 | 0.150 | | |
| 24 | -32.606 | 1.000 | 1.91082 | 35.25 |
| 25 | 17.413 | 6.802 | 1.53172 | 48.84 |
| 26 | -27.920 | variable | | |
| 27 | -77.161 | 6.391 | 1.92286 | 20.88 |
| 28 | -12.827 | 1.500 | 1.91082 | 35.25 |
| 29 | -36.289 | 1.683 | | |
| 30 | -19.732 | 1.500 | 1.95375 | 32.32 |
| 31 | ∞ | variable | | |
| 32 | ∞ | 1.400 | 1.51680 | 64.20 |
| 33 | ∞ | 0.500 | | |

Aspherical Surface Data

| | K | A4 | A6 | A8 | A10 |
|---|---|---|---|---|---|
| 3rd surface | 0.0000 | 9.81152E-06 | -2.72593E-08 | -4.13140E-11 | 1.54636E-13 |
| 4th surface | 0.0000 | -1.04858E-05 | -3.40824E-08 | -4.47922E-10 | 7.74665E-13 |
| 19th surface | 0.0000 | 4.60386E-06 | -1.36891E-08 | 1.21122E-09 | -9.77662E-12 |
| 20th surface | 0.0000 | 2.70987E-05 | -2.52941E-08 | 1.43289E-09 | -1.12861E-11 |

Miscellaneous Data

| | Zoom ratio | 2.085 | | |
|---|---|---|---|---|
| | | Wide angle (W) | Middle (M) | Telephoto (T) |
| | Focal length | 16.400 | 23.700 | 34.200 |
| | F-number | 3.550 | 4.100 | 4.600 |
| | Half angle of view | 52.830 | 42.385 | 32.312 |
| | Ideal image height | 21.630 | 21.630 | 21.630 |
| | Total lens length | 147.938 | 141.629 | 142.892 |
| | BF | 0.500 | 0.500 | 0.500 |
| | d9 | 27.466 | 12.799 | 3.674 |
| | d12 | 7.653 | 8.835 | 8.526 |
| | d18 | 2.792 | 1.577 | 0.625 |
| | d26 | 0.500 | 1.715 | 2.668 |
| | d31 | 16.836 | 24.012 | 34.710 |

Shooting distance 350 mm

| | | | |
|---|---|---|---|
| d0 | 195.000 | 201.309 | 200.046 |
| d9 | 30.018 | 15.567 | 6.735 |
| d12 | 5.101 | 6.068 | 5.465 |

Zoom Lens Group Data

| Group | First surface | Focal length |
|---|---|---|
| 1 | 1 | -22.692 |
| 2a | 10 | 115.216 |
| 2b | 13 | 762.473 |
| 3 | 19 | 26.998 |
| 4 | 27 | -29.326 |

**Example 3**

Unit: mm

Surface Data

| Surface number | r | d | nd | vd |
|---|---|---|---|---|
| 1 | 78.059 | 3.000 | 1.72916 | 54.66 |
| 2 | 21.951 | 7.947 | | |
| 3* | 100.000 | 3.783 | 1.58313 | 59.38 |
| 4* | 29.053 | 2.544 | | |
| 5 | 62.049 | 3.409 | 1.74077 | 27.75 |
| 6 | -1430.022 | 1.500 | 1.69680 | 55.48 |
| 7 | 19.781 | 8.864 | | |
| 8 | 32.069 | 2.976 | 1.75520 | 27.52 |
| 9 | 86.589 | variable | | |

(continued)

| Surface number | r | d | nd | vd |
|---|---|---|---|---|
| 10 | -397.720 | 2.641 | 1.54072 | 47.18 |
| 11 | -27.266 | 1.999 | 1.90366 | 31.31 |
| 12 | -41.243 | variable | | |
| 13(stop) | ∞ | 2.000 | | |
| 14 | 28.139 | 3.800 | 1.49700 | 81.61 |
| 15 | -519.297 | 7.325 | | |
| 16 | 281.806 | 5.419 | 1.72825 | 28.31 |
| 17 | -16.433 | 0.808 | 1.95375 | 32.31 |
| 18 | 82.856 | variable | | |
| 19* | 28.815 | 4.898 | 1.58313 | 59.39 |
| 20* | -36.270 | 0.150 | | |
| 21 | 87.105 | 6.849 | 1.51680 | 64.20 |
| 22 | -14.086 | 0.800 | 1.95375 | 32.31 |
| 23 | -21.751 | 0.150 | | |
| 24 | -243.380 | 1.000 | 1.95375 | 32.31 |
| 25 | 16.757 | 5.376 | 1.56883 | 56.04 |
| 26 | -139.797 | variable | | |
| 27 | -803.035 | 8.032 | 1.85896 | 22.73 |
| 28 | -12.551 | 1.654 | 1.91082 | 35.25 |
| 29 | -33.327 | 3.175 | | |
| 30 | -21.882 | 1.500 | 1.91082 | 35.25 |
| 31 | 184.510 | variable | | |
| 32 | ∞ | 1.400 | 1.51680 | 64.20 |
| 33 | ∞ | 0.500 | | |

Aspherical Surface Data

| | K | A4 | A6 | A8 | A10 |
|---|---|---|---|---|---|
| 3rd surface | 0.0000 | 3.87618E-05 | -1.05154E-07 | 1.56578E-10 | -1.95428E-13 |
| 4th surface | 0.0000 | 2.80403E-05 | -1.15553E-07 | -1.40461E-10 | 3.07757E-13 |
| 19th surface | 0.0000 | -5.76813E-06 | 1.50681E-08 | 1.54962E-10 | -9.99805E-13 |
| 20th surface | 0.0000 | 1.07315E-05 | -4.28280E-08 | 2.98226E-10 | -2.85841E-12 |

Miscellaneous Data

| Zoom ratio | 2.117 | | |
|---|---|---|---|
| | Wide angle (W) | Middle (M) | Telephoto (T) |
| Focal length | 16.300 | 23.700 | 34.500 |
| F-number | 3.550 | 4.100 | 4.600 |
| Half angle of view | 52.999 | 42.385 | 32.086 |
| Ideal image height | 21.630 | 21.630 | 21.630 |
| Total lens length | 147.938 | 141.482 | 143.642 |
| BF | 0.500 | 0.500 | 0.500 |
| d9 | 25.866 | 13.126 | 3.719 |
| d12 | 7.579 | 6.064 | 7.579 |
| d18 | 3.545 | 2.506 | 0.500 |

(continued)

| Zoom ratio | | 2.117 | | |
| --- | --- | --- | --- | --- |
| | | Wide angle (W) | Middle (M) | Telephoto (T) |
| | d26 | 0.500 | 1.540 | 3.545 |
| | d31 | 16.938 | 24.737 | 34.789 |

Shooting distance 350 mm

| | d0 | 195.000 | 201.456 | 199.296 |
| --- | --- | --- | --- | --- |
| | d9 | 28.636 | 16.129 | 7.087 |
| | d12 | 4.809 | 3.061 | 4.212 |

Zoom Lens Group Data

| Group | First surface | Focal length |
| --- | --- | --- |
| 1 | 1 | -22.740 |
| 2a | 10 | 131.605 |
| 2b | 13 | 584.313 |
| 3 | 19 | 29.930 |
| 4 | 27 | -46.758 |

**Example 4**

Unit: mm

Surface Data

| Surface number | r | d | nd | vd |
| --- | --- | --- | --- | --- |
| 1 | 58.556 | 3.000 | 1.80420 | 46.49 |
| 2 | 20.482 | 9.897 | | |
| 3* | 100.000 | 2.500 | 1.58313 | 59.38 |
| 4* | 20.167 | 1.705 | | |
| 5 | 41.329 | 5.772 | 1.76182 | 26.61 |
| 6 | -123.567 | 1.266 | | |
| 7 | -61.273 | 1.500 | 1.80420 | 46.49 |
| 8 | 22.135 | 4.670 | | |
| 9 | 33.900 | 4.127 | 1.72825 | 28.31 |
| 10 | -626.207 | variable | | |
| 11 | -84.138 | 2.757 | 1.51823 | 58.96 |
| 12 | -21.087 | 1.093 | 1.62041 | 60.35 |
| 13 | -38.718 | variable | | |
| 14(stop) | ∞ | 2.000 | | |
| 15 | 25.278 | 4.257 | 1.48749 | 70.45 |
| 16 | -503.594 | 5.646 | | |
| 17 | 42.548 | 9.666 | 1.49700 | 81.61 |
| 18 | -20.693 | 0.800 | 1.91082 | 35.25 |
| 19 | 72.699 | variable | | |

(continued)

| Surface number | r | d | nd | vd |
|---|---|---|---|---|
| 20* | 31.949 | 3.825 | 1.58313 | 59.39 |
| 21* | -44.345 | 0.152 | | |
| 22 | 55.676 | 7.957 | 1.60342 | 38.00 |
| 23 | -12.958 | 0.800 | 1.91082 | 35.25 |
| 24 | -24.685 | 0.261 | | |
| 25 | -109.266 | 1.000 | 1.91082 | 35.25 |
| 26 | 16.366 | 5.012 | 1.51823 | 58.96 |
| 27 | -355.899 | variable | | |
| 28 | 101.701 | 7.470 | 1.85896 | 22.73 |
| 29 | -13.748 | 1.500 | 1.91082 | 35.25 |
| 30 | -45.403 | 1.922 | | |
| 31 | -23.554 | 1.500 | 1.91082 | 35.25 |
| 32 | 539.490 | variable | | |
| 33 | ∞ | 1.400 | 1.51680 | 64.20 |
| 34 | ∞ | 0.500 | | |

Aspherical Surface Data

| | K | A4 | A6 | A8 | A10 |
|---|---|---|---|---|---|
| 3rd surface | 0.0000 | 8.50676E-06 | -3.19122E-08 | 4.16270E-11 | -8.10697E-14 |
| 4th surface | 0.0000 | -2.00238E-05 | -7.57635E-08 | -8.82930E-11 | -9.04918E-14 |
| 20th surface | 0.0000 | 3.57599E-06 | 5.14917E-08 | -3.83479E-11 | 3.05063E-12 |
| 21st surface | 0.0000 | 1.07903E-05 | -3.24055E-08 | 3.25253E-10 | -1.12931E-12 |

Miscellaneous Data

| Zoom ratio | 2.117 | | |
|---|---|---|---|
| | Wide angle (W) | Middle (M) | Telephoto (T) |
| Focal length | 16.300 | 23.700 | 34.500 |
| F-number | 3.550 | 4.100 | 4.600 |
| Half angle of view | 52.999 | 42.385 | 32.086 |
| Ideal image height | 21.630 | 21.630 | 21.630 |
| Total lens length | 147.121 | 143.430 | 147.938 |
| BF | 0.500 | 0.500 | 0.500 |
| d10 | 21.836 | 10.661 | 3.517 |
| d13 | 9.198 | 9.097 | 9.248 |
| d19 | 4.673 | 2.445 | 0.500 |
| d27 | 0.799 | 3.027 | 4.972 |
| d32 | 16.651 | 24.237 | 35.738 |

Shooting distance 350 mm

| | | | |
|---|---|---|---|
| d0 | 195.817 | 199.508 | 195.000 |
| d10 | 24.878 | 14.090 | 7.400 |

(continued)

| | | | |
|---|---|---|---|
| d13 | 6.156 | 5.668 | 5.365 |

Zoom Lens Group Data

| Group | First surface | Focal length |
|---|---|---|
| 1 | 1 | -20.147 |
| 2a | 11 | 189.996 |
| 2b | 14 | 108.080 |
| 3 | 20 | 34.900 |
| 4 | 28 | -77.673 |

**Example 5**

Unit: mm

Surface Data

| Surface number | r | d | nd | vd |
|---|---|---|---|---|
| 1 | 70.568 | 3.000 | 1.80420 | 46.49 |
| 2 | 22.096 | 8.366 | | |
| 3* | 100.000 | 4.000 | 1.58313 | 59.39 |
| 4* | 23.833 | 1.659 | | |
| 5 | 34.128 | 6.109 | 1.76182 | 26.61 |
| 6 | -489.803 | 2.141 | | |
| 7 | -64.375 | 1.500 | 1.80420 | 46.49 |
| 8 | 20.536 | 8.378 | | |
| 9 | 38.296 | 3.557 | 1.72825 | 28.31 |
| 10 | 380.445 | variable | | |
| 11 | 94.538 | 5.428 | 1.51823 | 58.96 |
| 12 | -26.450 | 1.929 | 1.62041 | 60.35 |
| 13 | -46.972 | variable | | |
| 14(stop) | ∞ | 2.548 | | |
| 15 | 24.319 | 4.297 | 1.48749 | 70.45 |
| 16 | -305.518 | 4.719 | | |
| 17 | 85.406 | 4.621 | 1.49700 | 81.61 |
| 18 | -20.358 | 0.862 | 1.91082 | 35.25 |
| 19 | 63.591 | variable | | |
| 20* | 36.389 | 4.171 | 1.58313 | 59.39 |
| 21* | -29.733 | 0.157 | | |
| 22 | 107.382 | 8.882 | 1.60342 | 38.00 |
| 23 | -11.954 | 0.800 | 1.91082 | 35.25 |
| 24 | -22.845 | 0.150 | | |
| 25 | -42.618 | 1.000 | 1.91082 | 35.25 |
| 26 | 22.813 | 4.680 | 1.51823 | 58.96 |
| 27 | -67.151 | variable | | |
| 28 | -1641.249 | 7.172 | 1.85896 | 22.73 |
| 29 | -14.030 | 1.500 | 1.91082 | 35.25 |
| 30 | -27.116 | 1.425 | | |

(continued)

| Surface number | r | d | nd | vd |
|---|---|---|---|---|
| 31 | -20.648 | 1.500 | 1.91082 | 35.25 |
| 32 | 3876.675 | variable | | |
| 33 | ∞ | 1.400 | 1.51680 | 64.20 |
| 34 | ∞ | 0.500 | | |

Aspherical Surface Data

| | K | A4 | A6 | A8 | A10 |
|---|---|---|---|---|---|
| 3rd surface | 0.0000 | 3.77861E-05 | -1.12510E-07 | 2.14217E-10 | -2.22112E-13 |
| 4th surface | 0.0000 | 2.25866E-05 | -1.51512E-07 | 7.07987E-11 | -1.28636E-13 |
| 20th surface | 0.0000 | 1.14979E-05 | 7.25555E-08 | 7.14863E-10 | -1.37209E-12 |
| 21st surface | 0.0000 | 1.77808E-05 | -2.10091E-08 | 1.07318E-09 | -5.72035E-12 |

Miscellaneous Data

| Zoom ratio | 2.117 | | |
|---|---|---|---|
| | Wide angle (W) | Middle (M) | Telephoto (T) |
| Focal length | 16.300 | 23.700 | 34.500 |
| F-number | 3.550 | 4.100 | 4.600 |
| Half angle of view | 52.999 | 42.385 | 32.086 |
| Ideal image height | 21.630 | 21.630 | 21.630 |
| Total lens length | 145.478 | 141.710 | 147.938 |
| BF | 0.500 | 0.500 | 0.500 |
| d10 | 20.517 | 9.700 | 2.600 |
| d13 | 6.766 | 5.424 | 6.766 |
| d19 | 4.722 | 2.724 | 0.500 |
| d27 | 0.500 | 2.498 | 4.722 |
| d32 | 16.523 | 24.915 | 36.900 |

Shooting distance 350 mm

| d0 | 197.460 | 201.228 | 195.000 |
|---|---|---|---|
| d10 | 22.129 | 11.334 | 4.365 |
| d13 | 5.154 | 3.789 | 5.001 |

Zoom Lens Group Data

| Group | First surface | Focal length |
|---|---|---|
| 1 | 1 | -18.999 |
| 2a | 11 | 68.414 |
| 2b | 14 | 4578.945 |
| 3 | 20 | 36.043 |
| 4 | 28 | -75.890 |

**Example 6**

Unit: mm

Surface Data

| Surface number | r | d | nd | vd |
|---|---|---|---|---|
| 1 | 54.162 | 3.000 | 1.80420 | 46.49 |
| 2 | 21.623 | 3.930 | | |
| 3* | 100.000 | 2.991 | 1.58313 | 59.38 |
| 4* | 39.031 | 8.048 | | |
| 5 | -592.588 | 3.938 | 1.76182 | 26.61 |
| 6 | -64.503 | 0.452 | | |
| 7 | -56.953 | 1.500 | 1.80420 | 46.49 |
| 8 | 24.242 | 7.757 | | |
| 9 | 39.507 | 3.712 | 1.72825 | 28.31 |
| 10 | -438.731 | variable | | |
| 11 | 97.839 | 2.095 | 1.88100 | 40.14 |
| 12 | -100.000 | 1.000 | 1.49700 | 81.61 |
| 13 | ∞ | variable | | |
| 14(stop) | ∞ | 2.000 | | |
| 15 | 19.500 | 1.074 | 1.48749 | 70.45 |
| 16 | 20.887 | 7.061 | | |
| 17 | 29.154 | 6.623 | 1.62041 | 60.34 |
| 18 | -18.424 | 0.800 | 1.91082 | 35.25 |
| 19 | 56.136 | variable | | |
| 20* | 30.619 | 4.668 | 1.58313 | 59.39 |
| 21* | -29.116 | 0.150 | | |
| 22 | 54.986 | 6.556 | 1.56732 | 42.84 |
| 23 | -15.246 | 0.800 | 1.91082 | 35.25 |
| 24 | -25.101 | 0.150 | | |
| 25 | -106.732 | 1.000 | 1.91082 | 35.25 |
| 26 | 16.596 | 4.458 | 1.48749 | 70.44 |
| 27 | 196.038 | variable | | |
| 28 | 594.257 | 8.262 | 1.84666 | 23.78 |
| 29 | -12.285 | 1.500 | 1.91082 | 35.25 |
| 30 | -27.835 | 1.615 | | |
| 31 | -19.793 | 1.500 | 1.91082 | 35.25 |
| 32 | 1129.233 | variable | | |
| 33 | -52.904 | 2.853 | 1.88300 | 40.80 |
| 34 | -38.705 | 15.000 | | |
| 35 | ∞ | 1.400 | 1.51680 | 64.20 |
| 36 | ∞ | 0.500 | | |

Aspherical Surface Data

| | K | A4 | A6 | A8 | A10 |
|---|---|---|---|---|---|
| 3rd surface | 0.0000 | 7.00143E-05 | -1.31250E-07 | 2.56808E-10 | -2.08574E-13 |
| 4th surface | 0.0000 | 6.87269E-05 | -1.04920E-07 | 6.42097E-11 | -2.32910E-13 |

(continued)

|  | K | A4 | A6 | A8 | A10 |
|---|---|---|---|---|---|
| 20th surface | 0.0000 | -6.71634E-06 | 2.95476E-08 | 3.79955E-11 | -5.58297E-14 |
| 21st surface | 0.0000 | 1.19302E-05 | -1.44697E-08 | 1.59931E-10 | -1.05484E-12 |

| Zoom ratio | 2.117 | | |
|---|---|---|---|
|  | Wide angle (W) | Middle (M) | Telephoto (T) |
| Focal length | 16.300 | 23.700 | 34.500 |
| F-number | 3.550 | 4.100 | 4.600 |
| Half angle of view | 52.999 | 42.385 | 32.086 |
| Ideal image height | 21.630 | 21.630 | 21.630 |
| Total lens length | 143.021 | 141.289 | 147.939 |
| BF | 0.500 | 0.500 | 0.500 |
| d10 | 24.394 | 11.543 | 2.600 |
| d13 | 6.928 | 8.142 | 9.996 |
| d19 | 1.834 | 1.440 | 0.500 |
| d27 | 0.756 | 1.150 | 2.090 |
| d32 | 2.707 | 12.612 | 26.351 |

Shooting distance 350 mm

| d0 | 199.917 | 201.650 | 195.000 |
|---|---|---|---|
| d10 | 26.852 | 14.061 | 5.344 |
| d13 | 4.470 | 5.624 | 7.252 |

Zoom Lens Group Data

| Group | First surface | Focal length |
|---|---|---|
| 1 | 1 | -23.673 |
| 2a | 11 | 78.087 |
| 2b | 14 | -190.425 |
| 3 | 20 | 31.137 |
| 4 | 28 | -63.913 |
| 5 | 33 | 149.254 |

**Table 1**

|  | Example 1 | Example 2 | Example 3 | Example 4 | Example 5 | Example 6 |
|---|---|---|---|---|---|---|
| f4 | -37.981 | -29.326 | -46.758 | -77.673 | -75.890 | -63.913 |
| f1 | -20.951 | -22.692 | -22.740 | -20.147 | -18.999 | -23.673 |
| β2w | 2.616 | 3.236 | 2.466 | 1.572 | 61.812 | 76.450 |
| βrw | -0.299 | -0.223 | -0.291 | -0.514 | -0.015 | -0.009 |
| f3 | 27.378 | 26.998 | 29.930 | 34.900 | 36.043 | 31.137 |
| M4 | 16.886 | 17.873 | 17.851 | 19.089 | 20.379 | 23.647 |

(continued)

| | Example 1 | Example 2 | Example 3 | Example 4 | Example 5 | Example 6 |
|---|---|---|---|---|---|---|
| M3 | 20.441 | 20.041 | 20.896 | 23.262 | 24.601 | 24.981 |
| $\Delta$Pgf | 0.028 | 0.028 | 0.021 | 0.021 | 0.021 | 0.014 |
| f2 | 80.153 | 82.584 | 86.823 | 62.169 | 51.210 | 90.398 |
| f2a | 113.921 | 115.216 | 131.605 | 189.995 | 68.414 | 78.087 |
| f2b | 896.398 | 762.474 | 584.313 | 108.083 | 4584.921 | -190.419 |

**Table 2**

| Conditional Formula Value | | Example 1 | Example 2 | Example 3 | Example 4 | Example 5 | Example 6 |
|---|---|---|---|---|---|---|---|
| (1) | f4/f1 | 1.813 | 1.292 | 2.056 | 3.855 | 3.994 | 2.700 |
| (2) | $(1-\beta2w^2)\cdot\beta rw^2$ | -0.523 | -0.473 | -0.430 | -0.389 | -0.817 | -0.474 |
| (3) | f3/f4 | -0.721 | -0.921 | -0.640 | -0.449 | -0.475 | -0.487 |
| (4) | f3/f1 | -1.307 | -1.190 | -1.316 | -1.732 | -1.897 | -1.315 |
| (5) | M4/M3 | 0.826 | 0.892 | 0.854 | 0.821 | 0.828 | 0.947 |
| (6) | $\Delta$Pgf | 0.028 | 0.028 | 0.021 | 0.021 | 0.021 | 0.014 |

**Claims**

1. A zoom lens system (ZL) comprising, in order from an object side, a first lens group (Gr1) having a negative optical power, a second lens group (Gr2) having a positive optical power, a third lens group (Gr3) having a positive optical power, and a fourth lens group (Gr4) having a negative optical power, the zoom lens system (ZL) configured to perform magnification variation by varying an axial group-to-group distance,
wherein
during magnification variation from a wide angle end (W) to a telephoto end (T), a distance between the first lens group (Gr1) and the second lens group (Gr2) is configured to be reduced, a distance between the second lens group (Gr2) and the third lens group (Gr3) is configured to be reduced, and a distance between the third lens group (Gr3) and the fourth lens group (Gr4) is configured to be increased, the second lens group (Gr2) is composed of, in order from the object side, a second-a lens group (Gr2a) and a second-b lens group (Gr2b), the second-a lens group (Gr2a) having a positive optical power, and focusing to a nearby object is configured to be performed by moving the second-a lens group (Gr2a) toward an image side,
**characterized in that**
the zoom lens system comprises an aperture stop (ST) located at the most object-side position in the second-b lens group (Gr2b), and configured to move as a part of the second-b lens group (Gr2b) during magnification variation,
a distance between the second-a lens group (Gr2a) and the second-b lens group (Gr2b) is configured to be varied during magnification variation,
the second-b lens group (Gr2b) and the fourth lens group (Gr4) are configured to move integrally with each other during magnification variation, and conditional formulae (1), (2) and (5) below are satisfied:

$$0.6 < f4/f1 < 5.0 \qquad\qquad (1)$$

$$-2.0 < (1 - \beta2w^2) \times \beta rw^2 < -0.1 \qquad\qquad (2)$$

$$0.75 < M4/M3 < 0.95 \qquad\qquad (5)$$

where

β2w represents a paraxial lateral magnification of the second-a lens group (Gr2a) at the wide angle end (W);

Prw represents a composite paraxial lateral magnification of the second-b lens group (Gr2b) and subsequent lens groups at the wide angle end (W);

f1 represents a focal length of the first lens group (Gr1);

f4 represents a focal length of the fourth lens group (Gr4);

M4 represents an amount of movement of the fourth lens group (Gr4) on an optical axis (AX) during magnification variation from the wide angle end (W) to the telephoto end (T); and

M3 represents an amount of movement of the third lens group (Gr3) on the optical axis (AX) during magnification variation from the wide angle end (W) to the telephoto end (T).

2. The zoom lens system (ZL) according to claim 1, wherein conditional formula (3) below is satisfied:

$$-1.5 < f3/f4 < -0.3 \tag{3}$$

where

f3 represents a focal length of the third lens group (Gr3); and

f4 represents the focal length of the fourth lens group (Gr4).

3. The zoom lens system (ZL) according to claim 1 or claim 2, wherein conditional formula (4) below is satisfied:

$$-2.5 < f3/f1 < -0.8 \tag{4}$$

where

f1 represents the focal length of the first lens group (Gr1), and

f3 represents the focal length of the third lens group (Gr3).

4. The zoom lens system (ZL) according to any one of claims 1 to 3, wherein two cemented lens elements are arranged adjacent to each other in the third lens group (Gr3) such that a cemented surface of an object-side cemented lens element is concave to the object side, and a cemented surface of an image-side cemented lens element is concave to the image side.

5. The zoom lens system (ZL) according to any one of claims 1 to 4, wherein the fourth lens group (Gr4) includes at least one positive lens element using a glass material that satisfies conditional formula (6) below:

$$\Delta Pgf > 0.01 \tag{6}$$

where

$$\Delta Pgf = Pgf + 0.0018 \times Vd - 0.64842;$$

$$Pgf = (ng - nF)/(nF - nC);$$

$$Vd = (nd - 1)/(nF - nC);$$

nd represents a refractive index for the d-line;

ng represents a refractive index for the g-line;

nF represents a refractive index for the F-line; and

nC represents a refractive index for the C-line.

6. An imaging optical device (LU) comprising the zoom lens system (ZL) according to any one of claims 1 to 5, and an imaging element (SR) which is configured to convert an optical image (IM) formed on a light receiving surface (SS) into an electric signal, wherein the zoom lens system (ZL) is arranged such that an optical image (IM) of a subject is formed on the light receiving surface (SS) of the imaging element (SR).

7. A digital apparatus (DU) comprising the imaging optical device (LU) according to claim 6 so as to be additionally provided with at least one of a function of shooting a still image of the subject and a function of shooting a moving image of the subject.

**Patentansprüche**

1. Zoomlinsensystem (ZL) umfassend in einer Reihenfolge von einer Objektseite her eine erste Linsengruppe (Gr1) mit einer negativen optischen Leistung, eine zweite Linsengruppe (Gr2) mit einer positiven optischen Leistung, eine dritte Linsengruppe (Gr3) mit einer positiven optischen Leistung und eine vierte Linsengruppe (Gr4) mit einer negativen optischen Leistung, wobei das Zoomlinsensystem (ZL) ausgestaltet ist, um eine Vergrößerungsänderung auszuführen, indem eine axiale Gruppe-zu-Gruppe-Entfernung verändert wird, wobei während der Vergrößerungsänderung von einem Weitwinkelende (W) zu einem Teleobjektivende (T) eine Entfernung zwischen der ersten Linsengruppe (Gr1) und der zweiten Linsengruppe (Gr2) ausgestaltet ist, um verkleinert zu werden,

eine Entfernung zwischen der zweiten Linsengruppe (Gr2) und der dritten Linsengruppe (Gr3) ausgestaltet ist, um verkleinert zu werden, und

eine Entfernung zwischen der dritten Linsengruppe (Gr3) und der vierten Linsengruppe (Gr4) ausgestaltet ist, um vergrößert zu werden,

wobei die zweite Linsengruppe (Gr2) zusammengesetzt ist in der Reihenfolge von der Objektseite aus einer zweiten a-Linsengruppe (Gr2a) und einer zweiten b-Linsengruppe (Gr2b), wobei die zweite a-Linsengruppe (Gr2a), welche eine positive optische Leistung aufweist und auf ein nahes Objekt fokussiert ist, ausgestaltet ist, um durch ein Bewegen der zweiten a-Linsengruppe (Gr2a) zu einer Bildseite ausgeführt zu werden,

**dadurch gekennzeichnet,**

**dass** das Zoomlinsensystem eine Aperturblende (ST) umfasst, welche an der am nächsten an der Objektseite liegenden Position in der zweiten b-Linsengruppe (Gr2b) angeordnet ist und ausgestaltet ist, um sich als ein Teil der zweiten b-Linsengruppe (Grb) während der Vergrößerungsänderung zu bewegen,

wobei eine Entfernung zwischen der zweiten a-Linsengruppe (Gr2a) und der zweiten b-Linsengruppe (Gr2b) ausgestaltet ist, um während der Vergrößerungsänderung geändert zu werden,

wobei die zweite b-Linsengruppe (Gr2b) und die vierte Linsengruppe (Gr4) ausgestaltet sind, um sich integral miteinander während der Vergrößerungsänderung zu bewegen, und

folgende bedingte Formeln (1), (2) und (5) erfüllt sind:

$$0{,}6 < f4/f1 < 5{,}9 \qquad\qquad (1)$$

$$2{,}0 < (1 - \beta2w^2) \times \beta rw^2 < -0{,}1 \qquad\qquad (2)$$

$$0{,}75 < M4/M3 < 0{,}95 \qquad\qquad (5)$$

wobei

$\beta2w$ einer paraxialen lateralen Vergrößerung der zweiten a-Linsengruppe (Gr2a) an dem Weitwinkelende (W) entspricht,

$\beta rw$ einer zusammengesetzten paraxialen lateralen Vergrößerung der zweiten b-Linsengruppe (Gr2b) und folgenden Linsengruppen an dem Weitwinkelende (W) entspricht;

f1 einer Brennweite der ersten Linsengruppe (Gr1) entspricht;

f4 einer Brennweite der vierten Linsengruppe (Gr4) entspricht;

M4 einem Bewegungsumfang der vierten Linsengruppe (Gr4) auf einer optischen Achse (AX) während der Vergrößerungsänderung von dem Weitwinkelende (W) zu dem Teleobjektivende (T) entspricht; und

M3 einem Bewegungsumfang der dritten Linsengruppe (Gr3) auf der optischen Achse (AX) während der Vergrößerungsänderung von dem Weitwinkelende (W) zu dem Teleobjektivende (T) entspricht.

2.  Zoomlinsensystem (ZL) nach Anspruch 1, wobei die folgende bedingte Formel (3) erfüllt ist:

$$-1,5 < f3/f4 < -0,3 \qquad (3)$$

wobei

    f3 einer Brennweite der dritten Linsengruppe (Gr3) entspricht;
    f4 der Brennweite der vierten Linsengruppe (Gr4) entspricht.

3.  Zoomlinsensystem (ZL) nach Anspruch 1 oder Anspruch 2, wobei die folgende bedingte Formel (4) erfüllt ist:

$$-2,5 < f3/f1 < -0,8 \qquad (4)$$

wobei

    f1 der Brennweite der ersten Linsengruppe (Gr1) entspricht, und
    f3 der Brennweite der dritten Linsengruppe (Gr3) entspricht.

4.  Zoomlinsensystem (ZL) nach einem der Ansprüche 1 bis 3, wobei zwei zementierte Linsenelemente nebeneinander in der dritten Linsengruppe (Gr3) angeordnet sind, so dass eine zementierte Oberfläche eines objektseitigen zementierten Linsenelements zu der Objektseite konkav ist und eine zementierte Oberfläche eines bildseitigen zementierten Linsenelements zu der Bildseite konkav ist.

5.  Zoomlinsensystem (ZL) nach einem der Ansprüche 1 bis 4, wobei die vierte Linsengruppe (Gr4) zumindest ein positives Linsenelement aufweist, welches ein Glasmaterial einsetzt, das die folgende bedingte Formel (6) erfüllt:

$$\Delta Pgf > 0,01 \qquad (6)$$

wobei

$$\Delta Pgf = Pgf + 0,0018 \times Vd - 0,64842;$$

$$Pgf = (ng - nF) / (nF - nC);$$

$$Vd = (nd - 1) / (nF - nC);$$

nd einem Brechungsindex für die d-Linie entspricht;
ng einem Brechungsindex für die g-Linie entspricht;
nF einem Brechungsindex für die F-Linie entspricht; und
nC einem Brechungsindex für die C-Linie entspricht.

6.  Optische Bildgebungsvorrichtung (LU), welche das Zoomlinsensystem (ZL) nach einem der Ansprüche 1 bis 5 und ein Bildgebungselement (SR) umfasst, welches ausgestaltet ist, um ein optisches Bild (IM), das auf einer Licht empfangenden Oberfläche (SS) ausgebildet ist, in ein elektrisches Signal zu wandeln, wobei das Zoomlinsensystem (ZL) angeordnet ist, so dass ein optisches Bild (IM) eines Objekts auf der Licht empfangenden Oberfläche (SS) des Bildgebungselements (SR) ausgebildet wird.

7.  Digitale Vorrichtung (DU), welche die optische Bildgebungsvorrichtung (LU) nach Anspruch 6 umfasst, um so zusätzlich mit mindestens einer Funktion eines Fotografierens eines unbewegten Bildes des Objekts und einer Funktion eines Fotografierens eines bewegten Bildes des Objekts versehen ist.

**Revendications**

1. Système de lentilles à focale variable (ZL) comprenant, dans l'ordre depuis un côté objet, un premier groupe de lentilles (Gr1) ayant une puissance optique négative, un deuxième groupe de lentilles (Gr2) ayant une puissance optique positive, un troisième groupe de lentilles (Gr3) ayant une puissance optique positive et un quatrième groupe de lentilles (Gr4) ayant une puissance optique négative, le système d'objectif à focale variable (ZL) étant configuré pour effectuer une variation de grossissement en faisant varier une distance axiale de groupe à groupe,
dans lequel
pendant la variation de grossissement d'une extrémité grand angle (W) à une extrémité téléobjectif (T), une distance entre le premier groupe de lentilles (Gr1) et le deuxième groupe de lentilles (Gr2) est configurée pour être réduite, une distance entre le deuxième groupe de lentilles (Gr2) et le troisième groupe de lentilles (Gr3) est configurée pour être réduite, et
une distance entre le troisième groupe de lentilles (Gr3) et le quatrième groupe de lentilles (Gr4) est configurée pour être augmentée,
le deuxième groupe de lentilles (Gr2) est composé, dans l'ordre depuis le côté objet, d'un deuxième groupe de lentilles-a (Gr2a) et d'un deuxième groupe de lentilles-b (Gr2b), le deuxième groupe de lentilles-a (Gr2a) ayant une puissance optique positive et la mise au point sur un objet proche est configurée pour être effectuée en déplaçant le deuxième groupe de lentilles-a (Gr2a) vers un côté image,
**caractérisé en ce que**
le système de lentilles à focale variable comprend un diaphragme d'ouverture (ST) situé au niveau de la position la plus proche du côté objet dans le deuxième groupe de lentilles-b (Gr2b) et configuré pour se déplacer en tant que partie du deuxième groupe de lentilles-b (Gr2b) pendant la variation de grossissement,
une distance entre le deuxième groupe de lentilles-a (Gr2a) et le deuxième groupe de lentilles-b (Gr2b) est configurée pour varier pendant la variation de grossissement,
le deuxième groupe de lentilles-b (Gr2b) et le quatrième groupe de lentilles (Gr4) sont configurés pour se déplacer intégralement l'un avec l'autre pendant la variation de grossissement, et
les formules conditionnelles (1), (2) et (5) ci-dessous sont satisfaites :

$$0,6 < f4/f1 < 5,0 \quad (1)$$

$$-2,0 < (1 - \beta 2w^2) \times \beta rw^2 < -0,1 \quad (2)$$

$$0,75 < M4/M3 < 0,95 \quad (5)$$

où

$\beta 2w$ représente un grossissement latéral paraxial du deuxième groupe de lentilles-a (Gr2a) au niveau de l'extrémité grand angle (W) ;
$\beta rw$ représente un grossissement latéral paraxial composite du deuxième groupe de lentilles-b (Gr2b) et des groupes de lentilles suivants au niveau de l'extrémité grand angle (W) ;
f1 représente une longueur focale du premier groupe de lentilles (Gr1) ;
f4 représente une longueur focale du quatrième groupe de lentilles (Gr4) ;
M4 représente une quantité de mouvement du quatrième groupe de lentilles (Gr4) sur un axe optique (AX) pendant la variation de grossissement de l'extrémité grand angle (W) à l'extrémité téléobjectif (T) ; et
M3 représente une quantité de mouvement du troisième groupe de lentilles (Gr3) sur l'axe optique (AX) pendant la variation de grossissement de l'extrémité grand angle (W) à l'extrémité téléobjectif (T).

2. Système de lentilles à focale variable (ZL) selon la revendication 1, dans lequel la formule conditionnelle (3) ci-dessous est satisfaite :

$$-1,5 < f3/f4 < -0,3 \text{ (3)}$$

où

f3 représente une longueur focale du troisième groupe de lentilles (Gr3) ; et
f4 représente la longueur focale du quatrième groupe de lentilles (Gr4).

3. Système de lentilles à focale variable (ZL) selon la revendication 1 ou 2, dans lequel la formule conditionnelle (4) ci-dessous est satisfaite :

$$-2,5 < f3/f1 < -0,8 \text{ (4)}$$

où

f1 représente la longueur focale du premier groupe de lentilles (Gr1) et
f3 représente la longueur focale du troisième groupe de lentilles (Gr3).

4. Système de lentilles à focale variable (ZL) selon l'une quelconque des revendications 1 à 3, dans lequel deux éléments de lentilles cimentés sont agencés de manière adjacente l'un à l'autre dans le troisième groupe de lentilles (Gr3) de sorte qu'une surface cimentée d'un élément de lentilles cimenté côté objet soit concave par rapport au côté objet et qu'une surface cimentée d'un élément de lentilles cimenté côté image soit concave par rapport au côté image.

5. Système de lentilles à focale variable (ZL) selon l'une quelconque des revendications 1 à 4, dans lequel le quatrième groupe de lentilles (Gr4) comporte au moins un élément de lentilles positif utilisant un matériau en verre qui satisfait la formule conditionnelle (6) ci-dessous :

$$\Delta Pgf > 0,01 \text{ (6)}$$

où

$$\Delta Pgf = Pgf + 0,0018 \times Vd - 0,64842 \text{ ;}$$

$$Pgf = (ng - nF)/(nF - nC) \text{ ;}$$

$$Vd = (nd - 1)/(nF - nC) \text{ ;}$$

nd représente un indice de réfraction pour la ligne d ;
ng représente un indice de réfraction pour la ligne g ;
nF représente un indice de réfraction pour la ligne F ; et
nC représente un indice de réfraction pour la ligne C.

6. Dispositif optique d'imagerie (LU) comprenant le système de lentilles à focale variable (ZL) selon l'une quelconque des revendications 1 à 5, et un élément d'imagerie (SR) qui est configuré pour convertir une image optique (IM) formée sur une surface de réception de lumière (SS) en un signal électrique, où le système de lentilles à focale variable (ZL) est agencé de sorte qu'une image optique (IM) d'un sujet soit formée sur la surface de réception de lumière (SS) de l'élément d'imagerie (SR).

7. Appareil numérique (DU) comprenant le dispositif optique d'imagerie (LU) selon la revendication 6 de manière à être en outre pourvu d'au moins l'une d'une fonction de prise de vue d'une image fixe du sujet et d'une fonction de prise de vue d'une image animée du sujet.

## FIG.1

### EX1

# FIG.2

<u>EX2</u>

# FIG.3

<u>EX3</u>

# FIG.4

## EX4

# FIG.5

## EX5

# FIG.6

## EX6

(W)

(M)

(T)

## FIG.7A EX1,W
F=3.55

SPHERICAL
ABERRATION(mm)

---·- C-LINE
—— d-LINE
--- g-LINE

-0.40 -0.20 0.0 0.20 0.40

## FIG.7B EX1,W
Y'=21.6

ASTIGMATISM(mm)

—— S-IMAGE
--- M-IMAGE

-0.40 -0.20 0.0 0.20 0.40

## FIG.7C EX1,W
Y'=21.6

DISTORTION
ABERRATION(%)

—— d-LINE

-10.0 -5.0 0.0 5.0 10.0

## FIG.7D EX1,M
F=4.10

SPHERICAL
ABERRATION(mm)

---·- C-LINE
—— d-LINE
--- g-LINE

-0.40 -0.20 0.0 0.20 0.40

## FIG.7E EX1,M
Y'=21.6

ASTIGMATISM(mm)

—— S-IMAGE
--- M-IMAGE

-0.40 -0.20 0.0 0.20 0.40

## FIG.7F EX1,M
Y'=21.6

DISTORTION
ABERRATION(%)

—— d-LINE

-10.0 -5.0 0.0 5.0 10.0

## FIG.7G EX1,T
F=4.60

SPHERICAL
ABERRATION(mm)

---·- C-LINE
—— d-LINE
--- g-LINE

-0.40 -0.20 0.0 0.20 0.40

## FIG.7H EX1,T
Y'=21.6

ASTIGMATISM(mm)

—— S-IMAGE
--- M-IMAGE

-0.40 -0.20 0.0 0.20 0.40

## FIG.7I EX1,T
Y'=21.6

DISTORTION
ABERRATION(%)

—— d-LINE

-10.0 -5.0 0.0 5.0 10.0

35

# FIG.8A EX2.W

F=3.55

C-LINE
d-LINE
g-LINE

-0.40 -0.20 0.0 0.20 0.40
SPHERICAL
ABERRATION(mm)

# FIG.8B EX2.W

Y'=21.6

S-IMAGE
M-IMAGE

-0.40 -0.20 0.0 0.20 0.40
ASTIGMATISM(mm)

# FIG.8C EX2.W

Y'=21.6

d-LINE

-10.0 -5.0 0.0 5.0 10.0
DISTORTION
ABERRATION(%)

# FIG.8D EX2.M

F=4.10

C-LINE
d-LINE
g-LINE

-0.40 -0.20 0.0 0.20 0.40
SPHERICAL
ABERRATION(mm)

# FIG.8E EX2.M

Y'=21.6

S-IMAGE
M-IMAGE

-0.40 -0.20 0.0 0.20 0.40
ASTIGMATISM(mm)

# FIG.8F EX2.M

Y'=21.6

d-LINE

-10.0 -5.0 0.0 5.0 10.0
DISTORTION
ABERRATION(%)

# FIG.8G EX2.T

F=4.60

C-LINE
d-LINE
g-LINE

-0.40 -0.20 0.0 0.20 0.40
SPHERICAL
ABERRATION(mm)

# FIG.8H EX2.T

Y'=21.6

S-IMAGE
M-IMAGE

-0.40 -0.20 0.0 0.20 0.40
ASTIGMATISM(mm)

# FIG.8I EX2.T

Y'=21.6

d-LINE

-10.0 -5.0 0.0 5.0 10.0
DISTORTION
ABERRATION(%)

36

## FIG.9A EX3,W

F=3.55

C-LINE
d-LINE
g-LINE

-0.40 -0.20 0.0 0.20 0.40
SPHERICAL
ABERRATION(mm)

## FIG.9B EX3,W

Y'=21.6

S-IMAGE
M-IMAGE

-0.40 -0.20 0.0 0.20 0.40
ASTIGMATISM(mm)

## FIG.9C EX3,W

Y'=21.6

d-LINE

-10.0 -5.0 0.0 5.0 10.0
DISTORTION
ABERRATION(%)

## FIG.9D EX3,M

F=4.10

C-LINE
d-LINE
g-LINE

-0.40 -0.20 0.0 0.20 0.40
SPHERICAL
ABERRATION(mm)

## FIG.9E EX3,M

Y'=21.6

S-IMAGE
M-IMAGE

-0.40 -0.20 0.0 0.20 0.40
ASTIGMATISM(mm)

## FIG.9F EX3,M

Y'=21.6

d-LINE

-10.0 -5.0 0.0 5.0 10.0
DISTORTION
ABERRATION(%)

## FIG.9G EX3,T

F=4.60

C-LINE
d-LINE
g-LINE

-0.40 -0.20 0.0 0.20 0.40
SPHERICAL
ABERRATION(mm)

## FIG.9H EX3,T

Y'=21.6

S-IMAGE
M-IMAGE

-0.40 -0.20 0.0 0.20 0.40
ASTIGMATISM(mm)

## FIG.9I EX3,T

Y'=21.6

d-LINE

-10.0 -5.0 0.0 5.0 10.0
DISTORTION
ABERRATION(%)

# FIG.10A EX4,W   FIG.10B EX4,W   FIG.10C EX4,W

F=3.55

1.00
0.75
0.50
0.25

-·--- C-LINE
——— d-LINE
- - - g-LINE

-0.40 -0.20 0.0 0.200.40
SPHERICAL
ABERRATION(mm)

Y'=21.6

21.64
16.23
10.82
5.41

——— S-IMAGE
- - - M-IMAGE

-0.40 -0.20 0.0 0.200.40
ASTIGMATISM(mm)

Y'=21.6

21.64
16.23
10.82
5.41

——— d-LINE

-10.0 -5.0 0.0 5.0 10.0
DISTORTION
ABERRATION(%)

# FIG.10D EX4,M   FIG.10E EX4,M   FIG.10F EX4,M

F=4.10

1.00
0.75
0.50
0.25

-·--- C-LINE
——— d-LINE
- - - g-LINE

-0.40 -0.20 0.0 0.200.40
SPHERICAL
ABERRATION(mm)

Y'=21.6

21.64
16.23
10.82
5.41

——— S-IMAGE
- - - M-IMAGE

-0.40 -0.20 0.0 0.200.40
ASTIGMATISM(mm)

Y'=21.6

21.64
16.23
10.82
5.41

——— d-LINE

-10.0 -5.0 0.0 5.0 10.0
DISTORTION
ABERRATION(%)

# FIG.10G EX4,T   FIG.10H EX4,T   FIG.10I EX4,T

F=4.60

1.00
0.75
0.50
0.25

-·--- C-LINE
——— d-LINE
- - - g-LINE

-0.40 -0.20 0.0 0.200.40
SPHERICAL
ABERRATION(mm)

Y'=21.6

21.64
16.23
10.82
5.41

——— S-IMAGE
- - - M-IMAGE

-0.40 -0.20 0.0 0.200.40
ASTIGMATISM(mm)

Y'=21.6

21.64
16.23
10.82
5.41

——— d-LINE

-10.0 -5.0 0.0 5.0 10.0
DISTORTION
ABERRATION(%)

# FIG.11A EX5,W    FIG.11B EX5,W    FIG.11C EX5,W

F=3.55

1.00
0.75
0.50
0.25

---·--- C-LINE
——— d-LINE
- - - g-LINE

-0.40 -0.20 0.0 0.20 0.40
SPHERICAL
ABERRATION(mm)

Y'=21.6

21.64
16.23
10.82
5.41

——— S-IMAGE
- - - M-IMAGE

-0.40 -0.20 0.0 0.20 0.40
ASTIGMATISM(mm)

Y'=21.6

21.64
16.23
10.82
5.41

——— d-LINE

-10.0 -5.0 0.0 5.0 10.0
DISTORTION
ABERRATION(%)

# FIG.11D EX5,M    FIG.11E EX5,M    FIG.11F EX5,M

F=4.10

1.00
0.75
0.50
0.25

---·--- C-LINE
——— d-LINE
- - - g-LINE

-0.40 -0.20 0.0 0.20 0.40
SPHERICAL
ABERRATION(mm)

Y'=21.6

21.64
16.23
10.82
5.41

——— S-IMAGE
- - - M-IMAGE

-0.40 -0.20 0.0 0.20 0.40
ASTIGMATISM(mm)

Y'=21.6

21.64
16.23
10.82
5.41

——— d-LINE

-10.0 -5.0 0.0 5.0 10.0
DISTORTION
ABERRATION(%)

# FIG.11G EX5,T    FIG.11H EX5,T    FIG.11I EX5,T

F=4.60

1.00
0.75
0.50
0.25

---·--- C-LINE
——— d-LINE
- - - g-LINE

-0.40 -0.20 0.0 0.20 0.40
SPHERICAL
ABERRATION(mm)

Y'=21.6

21.64
16.23
10.82
5.41

——— S-IMAGE
- - - M-IMAGE

-0.40 -0.20 0.0 0.20 0.40
ASTIGMATISM(mm)

Y'=21.6

21.64
16.23
10.82
5.41

——— d-LINE

-10.0 -5.0 0.0 5.0 10.0
DISTORTION
ABERRATION(%)

## FIG.12A EX6.W   FIG.12B EX6.W   FIG.12C EX6.W

F=3.55 — SPHERICAL ABERRATION(mm)
C-LINE, d-LINE, g-LINE

Y'=21.6 — ASTIGMATISM(mm)
S-IMAGE, M-IMAGE

Y'=21.6 — DISTORTION ABERRATION(%)
d-LINE

## FIG.12D EX6.M   FIG.12E EX6.M   FIG.12F EX6.M

F=4.10 — SPHERICAL ABERRATION(mm)
C-LINE, d-LINE, g-LINE

Y'=21.6 — ASTIGMATISM(mm)
S-IMAGE, M-IMAGE

Y'=21.6 — DISTORTION ABERRATION(%)
d-LINE

## FIG.12G EX6.T   FIG.12H EX6.T   FIG.12I EX6.T

F=4.60 — SPHERICAL ABERRATION(mm)
C-LINE, d-LINE, g-LINE

Y'=21.6 — ASTIGMATISM(mm)
S-IMAGE, M-IMAGE

Y'=21.6 — DISTORTION ABERRATION(%)
d-LINE

# FIG.13A EX1.W

LATERAL CHROMATIC
ABERRATION

# FIG.13B EX1.M

LATERAL CHROMATIC
ABERRATION

# FIG.13C EX1.T

LATERAL CHROMATIC
ABERRATION

# FIG.14A EX2,W

LATERAL CHROMATIC
ABERRATION

# FIG.14B EX2,M

LATERAL CHROMATIC
ABERRATION

# FIG.14C EX2,T

LATERAL CHROMATIC
ABERRATION

EP 3 327 480 B1

FIG.15A EX3,W

FIG.15B EX3,M

FIG.15C EX3,T

43

# FIG.16A EX4,W

LATERAL CHROMATIC
ABERRATION

# FIG.16B EX4,M

LATERAL CHROMATIC
ABERRATION

# FIG.16C EX4,T

LATERAL CHROMATIC
ABERRATION

# FIG.17A EX5,W

g(INF)
g(D=350)
C(INF)
C(D=350)

LATERAL CHROMATIC
ABERRATION

# FIG.17B EX5,M

g(INF)
g(D=350)
C(INF)
C(D=350)

LATERAL CHROMATIC
ABERRATION

# FIG.17C EX5,T

g(INF)
g(D=350)
C(INF)
C(D=350)

LATERAL CHROMATIC
ABERRATION

# FIG.18A EX6,W

LATERAL CHROMATIC
ABERRATION

# FIG.18B EX6,M

LATERAL CHROMATIC
ABERRATION

# FIG.18C EX6,T

LATERAL CHROMATIC
ABERRATION

# FIG.19

**EP 3 327 480 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2014206674 A
- JP 2015166834 A
- WO 2015178095 A1
- US 2015124322 A1